# EUROPEAN PATENT APPLICATION

(11) **EP 4 236 536 A1**
(43) Date of publication of application: **30.08.2023**
(21) Application number: 21882190.8
(22) Date of filing: 25.10.2021
(51) Int. Cl.: H04W 72/04, H04W 24/02

(54) **SIGNAL TRANSMISSION METHOD AND APPARATUS**

(30) Priority: 23.10.2020 CN 202011150255
(71) Applicant: Datang Mobile Communications Equipment Co., Ltd., Beijing 100085 (CN)
(72) Inventor: HUANG, Qiuping, Beijing 100085 (CN); SU, Xin, Beijing 100085 (CN)
(74) Representative: Maiwald GmbH
(86) International application number: PCT/CN2021/126045
(87) International publication number: WO 2022/083778

(57) **Abstract**

This application provides a signal communications method and a signal communications method apparatus. The method includes: receiving a first reference signal; receiving a DMRS; determining a reception parameter of a first signal according to channel characteristics of the first reference signal and/or performing a channel estimation for the first signal according to the channel characteristics of the first reference signal; wherein each layer of the first signal is associated with N DMRS ports corresponding to the DMRS, the N DMRS ports associated with a layer of the first signal are in a QCL relationship with N first reference signals, respectively.

## Description

### CROSS-REFERENCE TO RELATED APPLICATION

The present application claims a priority to the Chinese patent application No. 202011150255.8 filed in China on October 23, 2020, a disclosure of which is incorporated herein by reference in its entirety.

### TECHNICAL FIELD

The present disclosure relates to the field of communications technology, in particular to a signal communications method and a signal communications apparatus.

### BACKGROUND

In the related art, user equipment (LTE) determines a large-scale parameter of a channel of any physical downlink shared channel (PDSCH) or physical downlink control channel (PDCCH) stream or layer and corresponding demodulation reference signal (DMRS) port according to the DMRS port, or according to a large-scale parameter determined from one quasi co-location (QCL) reference signal configured by a base station.

However, in a high speed train single frequency network (HST-SFN) scenario, the aforementioned method leads to inaccurate estimation of Doppler characteristics of PDSCH or PDCCH and DMRS thereof, thereby impacting signal demodulation performance.

### SUMMARY

An objective of the present disclosure is to provide a signal communications method and a signal communications method apparatus, to solve the problem of poor signal demodulation performance in the HST-SFN scenario.

To achieve the objective, the present disclosure provides in an embodiment a signal communications method including:
receiving a first reference signal;
receiving a demodulation reference signal (DMRS);
determining a reception parameter of a first signal according to channel characteristics of the first reference signal and/or performing a channel estimation for the first signal according to the channel characteristics of the first reference signal;
where each layer of the first signal is associated with N DMRS ports corresponding to the DMRS, the N DMRS ports associated with one layer of the first signal are in one-to-one correspondence with N first reference signals and there is a quasi co-location (QCL) relationship between each of the N DMRS ports and the corresponding first reference signal, N being an integer greater than 1.

Optionally, the first signal includes a plurality of layers, and DMRS ports associated with one layer of the plurality of layers are different from DMRS ports associated with another layer of the plurality of layers.

Optionally, the performing the channel estimation for the first signal according to the channel characteristics of the first reference signal includes: determining, according to channel measurement information of first DMRS ports and channel characteristics of second reference signals, a channel estimation value of a first layer of the first signal; where, the first DMRS ports are DMRS ports associated with the first layer of the first signal, the second reference signals are the first reference signals having the QCL relationship with the first DMRS ports, and the first layer of the first signal is any one layer of the first signal.

Optionally, the determining, according to the channel measurement information of the first DMRS ports and the channel characteristics of the second reference signals, the channel estimation value of the first layer of the first signal includes:
determining, according to the channel measurement information of each of the first DMRS ports and the channel characteristics of the second reference signal corresponding to the each first DMRS port, a first channel estimation value of the first layer of the first signal;
obtaining the channel estimation value of the first layer of the first signal by summing all the first channel estimation values corresponding to the first DMRS ports.

Optionally, the method further includes: sending or receiving the QCL relationship between the DMRS ports and the first reference signals through a transmission configuration indicator (TCI) state.

Optionally, the sending or receiving the QCL relationship between the DMRS ports and the first reference signals through the TCI state includes: sending or receiving N TCI states corresponding to the first signal, where each TCI state of the N TCI states is used for indicating a QCL relationship between one or more DMRS ports of the DMRS ports and a third reference signal, the third reference signal includes the first reference signal, and different TCI states of the TCI states correspond to different DMRS ports.

Optionally, the sending or receiving the QCL relationship between the DMRS ports and the first reference signals through the TCI state includes: sending or receiving M TCI states corresponding to the first signal, where at least one of the M TCI states includes identifier information used for indicating the N first reference signals and information used for indicating a QCL type corresponding to the N first reference signals, and different TCI states include different QCL types, M being an integer greater than 1.

Optionally, transmission of each layer of the first signal is performed through at least two transmission reception points (TRPs), and transmission of a signal corresponding to one DMRS port of the DMRS ports is performed through one TRP of the at least two TRPs or a group of TRPs of the at least two TRPs.

Optionally, different DMRS ports associated with one layer of the first signal correspond to different TRPs or TRP groups.

Optionally, the channel characteristics include a first large-scale property, the QCL relationship is a QCL relationship related to the first large-scale property, and the first large-scale property includes at least one of a delay property, a Doppler property, or a spatial property.

Optionally, the first reference signal includes at least one of:
a tracking reference signal (TRS);
a channel state information reference signal (CSI-RS) used for obtaining channel state information (CSI);
a CSI-RS used for beam management; or,
a sounding reference signal (SRS).

The present disclosure further provides in an embodiment a signal communications method including:
transmitting a first reference signal;
transmitting a first signal and a DMRS associated with the first signal;
where each layer of the first signal is associated with N DMRS ports corresponding to the DMRS, the N DMRS ports associated with one layer of the first signal are in one-to-one correspondence with N first reference signals and there is a QCL relationship between each of the N DMRS ports and the corresponding first reference signal, N being an integer greater than 1.

Optionally, the first signal includes a plurality of layers, and DMRS ports associated with one layer of the plurality of layers are different from DMRS ports associated with another layer of the plurality of layers.

Optionally, the method further includes: sending or receiving the QCL relationship between the DMRS ports and the first reference signals through a TCI state.

Optionally, the sending or receiving the QCL relationship between the DMRS ports and the first reference signals through the TCI state includes: sending or receiving N TCI states corresponding to the first signal, where each TCI state of the N TCI states is used for indicating a QCL relationship between one or more DMRS ports of the DMRS ports and a third reference signal, the third reference signal includes the first reference signal, and different TCI states of the TCI states correspond to different DMRS ports.

Optionally, the sending or receiving the QCL relationship between the DMRS ports and the first reference signals through the TCI state includes: sending or receiving M TCI states corresponding to the first signal, where at least one of the M TCI states includes identifier information used for indicating the N first reference signals and information used for indicating a QCL type corresponding to the N first reference signals, and different TCI states include different QCL types, M being an integer greater than 1.

Optionally, transmission of each layer of the first signal is performed through at least two TRPs, and transmission of a signal corresponding to one DMRS port of the DMRS ports is performed through one TRP of the at least two TRPs or a group of TRPs of the at least two TRPs.

Optionally, different DMRS ports associated with one layer of the first signal correspond to different TRPs or TRP groups.

Optionally, the QCL relationship is a QCL relationship related to a first large-scale property, and the first large-scale property includes at least one of a delay property, a Doppler property, or a spatial property.

Optionally, the first reference signal includes at least one of:
a TRS;
a CSI-RS used for obtaining CSI;
a CSI-RS used for beam management; or,
an SRS.

The present disclosure further provides in an embodiment a signal transmission apparatus including: a memory, a transceiver and a processor, where the memory is configured to store a computer program, the transceiver is configured to send and receive data under the control of the processor, and the processor is configured to read the computer program in the memory to implement following steps:
controlling the transceiver to receive a first reference signal;
controlling the transceiver to receive a DMRS;
determining a reception parameter of a first signal according to channel characteristics of the first reference signal and/or performing a channel estimation for the first signal according to the channel characteristics of the first reference signal;
where each layer of the first signal is associated with N DMRS ports corresponding to the DMRS, the N DMRS ports associated with one layer of the first signal are in one-to-one correspondence with N first reference signals and there is a QCL relationship between each of the N DMRS ports and the corresponding first reference signal, N being an integer greater than 1.

Optionally, the determining the reception parameter of the first signal according to the channel characteristics of the first reference signal and/or performing the channel estimation for the first signal according to the channel characteristics of the first reference signal includes: determining, according to channel measurement information of first DMRS ports and channel characteristics of second reference signals, a channel estimation value of a first layer of the first signal; where, the first DMRS ports are DMRS ports associated with the first layer of the first signal, the second reference signals are the first reference signals having the QCL relationship with the first DMRS ports, and the first layer of the first signal is any one layer of the first signal.

Optionally, the determining, according to the channel measurement information of the first DMRS ports and the channel characteristics of the second reference signals, the channel estimation value of the first layer of the first signal includes:
determining, according to the channel measurement information of each of the first DMRS ports and the channel characteristics of the second reference signal corresponding to the first DMRS port, a first channel estimation value of the first layer of the first signal;
obtaining the channel estimation value of the first layer of the first signal by summing all the first channel estimation values corresponding to the first DMRS ports.

Optionally, the transceiver is further configured to implement the following step: sending or receiving the QCL relationship between the DMRS ports and the first reference signals through a TCI state.

The present disclosure further provides in an embodiment a signal transmission apparatus including: a memory, a transceiver and a processor, where the memory is configured to store a computer program, the transceiver is configured to send and receive data under the control of the processor, and the processor is configured to read the computer program in the memory to implement following steps:
controlling the transceiver to transmit a first reference signal;
controlling the transceiver to transmit a first signal and a DMRS associated with the first signal;
where each layer of the first signal is associated with N DMRS ports corresponding to the DMRS, the N DMRS ports associated with one layer of the first signal are in one-to-one correspondence with N first reference signals and there is a QCL relationship between each of the N DMRS ports and the corresponding first reference signal, N being an integer greater than 1.

Optionally, the transceiver is further configured to implement the following step: sending or receiving the QCL relationship between the DMRS ports and the first reference signals through a TCI state.

Optionally, the sending or receiving, by the transceiver, the QCL relationship between the DMRS ports and the first reference signals through the TCI state includes: controlling the transceiver to send or receive N TCI states corresponding to the first signal, where each TCI state of the N TCI states is used for indicating a QCL relationship between one or more DMRS ports of the DMRS ports and a third reference signal, the third reference signal includes the first reference signal, and different TCI states of the TCI states correspond to different DMRS ports.

Optionally, the sending or receiving, by the transceiver, the QCL relationship between the DMRS ports and the first reference signals through the TCI state includes: controlling the transceiver to send or receive M TCI states corresponding to the first signal, where at least one of the M TCI states includes identifier information used for indicating the N first reference signals and information used for indicating a QCL type corresponding to the N first reference signals, and different TCI states include different QCL types, M being an integer greater than 1.

The present disclosure further provides in an embodiment a signal transmission apparatus including:
a first reception module, configured to receive a first reference signal;
a second reception module, configured to receive a DMRS;
a first determination module, configured to determine a reception parameter of a first signal according to channel characteristics of the first reference signal and/or perform a channel estimation for the first signal according to the channel characteristics of the first reference signal;
where each layer of the first signal is associated with N DMRS ports corresponding to the DMRS, the N DMRS ports associated with one layer of the first signal are in one-to-one correspondence with N first reference signals and there is a QCL relationship between each of the N DMRS ports and the corresponding first reference signal, N being an integer greater than 1.

The present disclosure further provides in an embodiment a signal transmission apparatus including:
a first transmitting module, configured to transmit a first reference signal;
a second transmitting module, configured to transmit a first signal and a DMRS associated with the first signal;
where each layer of the first signal is associated with N DMRS ports corresponding to the DMRS, the N DMRS ports associated with one layer of the first signal are in one-to-one correspondence with N first reference signals and there is a QCL relationship between each of the N DMRS ports and the corresponding first reference signal, N being an integer greater than 1.

The present disclosure further provides in an embodiment a processor readable storage medium storing a program instruction, where the program instruction is configured to be executed by a processor to implement steps of the aforementioned signal communications methods.

The foregoing technical solutions of the present disclosure have at least following beneficial effects.

In the technical solutions of the embodiments of the present disclosure, each layer of the first signal is associated with N DMRS ports corresponding to the DMRS, the N DMRS ports associated with one layer of the first signal are in one-to-one correspondence with N first reference signals and there is a QCL relationship between each of the N DMRS ports and the corresponding first reference signal, when signals corresponding to each DMRS port are sent from different TRPs, channel estimation for the first signal can be performed by using different first reference signals, thus the large-scale property of the channel can be estimated for each TRP separately, and a better demodulation performance can be achieved; additionally, the reception of the first signal can be performed accurately according to the channel characteristics of the first reference signal, which facilitates a better signal demodulation performance.

### BRIEF DESCRIPTION OF THE DRAWINGS

Fig. 1 is a schematic diagram of a deployment in an HST-SFN scenario;
Fig. 2 is a flow diagram of a signal communications method according to an embodiment of the present disclosure;
Fig. 3 is another flow diagram of a signal communications method according to an embodiment of the present disclosure;
Fig. 4 is a block diagram of the structure of a signal transmission apparatus according to an embodiment of the present disclosure;
Fig. 5 is another block diagram of the structure of a signal transmission apparatus according to an embodiment of the present disclosure;
Fig. 6 is a schematic modular diagram of a signal transmission apparatus according to an embodiment of the present disclosure; and
Fig. 7 is another schematic modular diagram of a signal transmission apparatus according to an embodiment of the present disclosure.

### DETAILED DESCRIPTION

The technical solutions according to embodiments of the present disclosure may be applied to various systems, particularly to a 5^{th} Generation (5G) system. For example, a suitable system may be a global system of mobile communication (GSM) system, a code division multiple access (CDMA) system, a wideband code division multiple access (WCDMA) system, a time division synchronous code division multiple access (TD-SCDMA) system, a general packet radio service (GPRS) system, a long term evolution (LTE) system (including TD-LTE and FDD LTE), a long term evolution advanced (LTE-A) system, a universal mobile telecommunication system (UMTS), a worldwide interoperability for microwave access (WiMAX) system, and a 5G New Radio (NR) system. Each of the systems includes a terminal device and a network device. The systems may further include a core network portion, such as an evolved packet system (EPS), and a 5G system (5GS/5GC).

To assist those skilled in the art to better understand embodiments of the present disclosure, explanation is provided hereinafter.

When performing channel estimation for a physical downlink shared channel (PDSCH), user equipment (UE) usually obtains channel estimation values of demodulation reference signal (DMRS) resource elements (REs) by means of DMRS and then obtains channel estimation values of PDSCH REs by interpolation. Due to limited quantity of DMRS physical resource blocks (PRBs), measurement precision of large-scale properties (e.g., Doppler shift, Doppler spread, average delay, and average delay) cannot be guaranteed, and thus accurate channel estimation interpolation coefficients cannot be obtained. In order to improve the channel estimation performance of UE, the UE usually needs to obtain time-domain and/or frequency-domain large-scale properties by means of a track reference signal (TRS), and obtain the interpolation for the channel estimation by using the time-domain and/or frequency-domain large-scale properties.

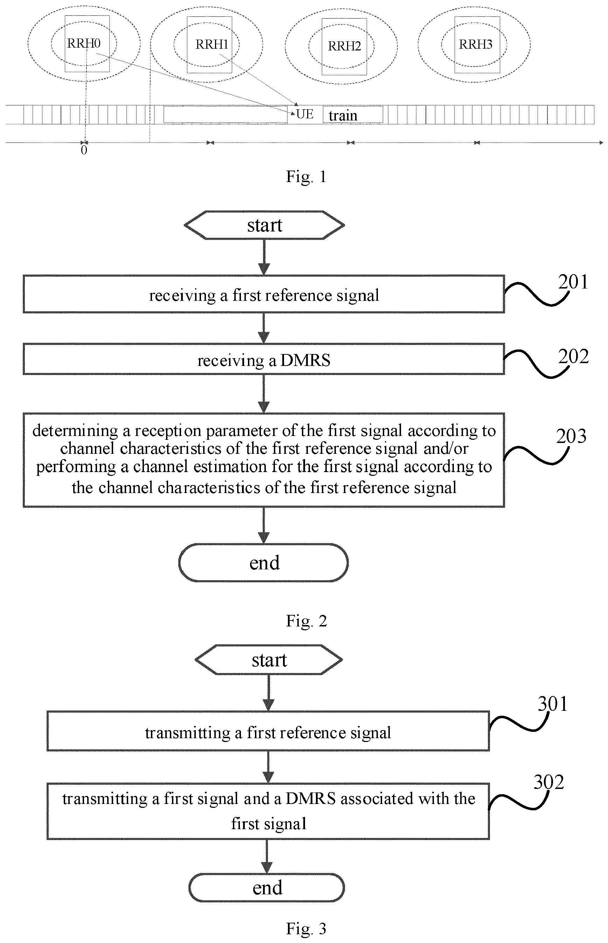

In the scenario of a high speed train, in order to prevent a terminal from performing cell handover frequently, a single frequency network (SFN) deployment is usually utilized. The scenario is called HST-SFN for short. Atypical deployment of a HST-SFN scenario is as shown in Fig. 1. Multiple remote radio heads (RRHs) are connected to the same build baseband unit (BBU) through optic fibers, where each RRH may be considered as one transmission point, and the multiple RRHs use the same cell identifier (ID). With the multiple RRHs being connected to the BBU, cell coverage is enlarged, and thus a terminal experiences less frequent cell handover. These RRHs are generally connected to the BBU through optic fibers, and in this case, it can be assumed that an ideal backhaul exists between these RRHs.

In the HST-SFN scenario in the related art, multiple RRHs are connected to the same BBU, and each RRH is generally equipped with two transmission reception points (TRPs) which are directed to different beam directions to cover the railway; all RRHs connected to the same BBU share the same cell ID.

The transmission scheme of the HST-SFN scenario in the related art is a transparent SFN transmission, that is, PDSCH and DMRS are transmitted from multiple RRHs and are configured with one TCI state, and UE estimates the Doppler characteristics of the channel experienced by the PDSCH (hereinafter referred to simply as PDSCH's Doppler characteristics) on the basis of the reference signal in the TCI state whose QCL type includes the Doppler characteristics (usually TRS).

In the HST-SFN scenario, the PDSCH is generally transmitted from all RRHs connected to a single BBU, that is, the all RRHs transmit an identical code word, layer and DMRS port, and thus the multiple RRHs in effect form more transmission paths. When LTE is in a position as show in Fig. 1, the PDSCHs arriving at the UE from RRH0 and RRH1 have a negative Doppler shift, while the PDSCHs arriving at the UE from RRH2 and RRH3 have a positive Doppler shift; in other words, a large Doppler spread may occur. Since the train moves at a high speed, different RRHs may result in significantly different Doppler shifts. Determining the Doppler shift of the PDSCH by using one QCL reference signal transmitted from all RRHs possibly renders the estimation of the Doppler shift very inaccurate, thereby impacting the PDSCH demodulation performance.

In the following, technical solutions in embodiments of the present disclosure will be described in a clear and complete manner with reference to the drawings related to the embodiments. Obviously, the described embodiments are merely a part of, rather than all of, the embodiments of the present disclosure. Based on the embodiments of the present disclosure, a person skilled in the art can obtain other embodiments without any creative effort, which shall also fall within the protection scope of the present disclosure.

As shown in Fig. 2, an embodiment of the present disclosure provides a signal communications method performed by a first communication device which is a network device or a terminal device. The method includes steps 201, 202, and 203.

Step 201: receiving a first reference signal.

In this step, the first reference signal includes at least one of:
a tracking reference signal (TRS);
a channel state information reference signal (CSI-RS) used for obtaining channel state information (CSI);
a CSI-RS used for beam management;
a sounding reference signal (SRS); or,
a synchronization signal and physical broadcast channel resource block (SSB).

Step 202: receiving a demodulation reference signal (DMRS).

Here, the DMRS is a DMRS associated with a first signal.

It is noted, the step 202 may precede the step 201, or follow the step 201.

Step 203: determining a reception parameter of the first signal according to channel characteristics of the first reference signal and/or performing a channel estimation for the first signal according to the channel characteristics of the first reference signal.

Each layer of the first signal is associated with N DMRS ports corresponding to the DMRS, the N DMRS ports associated with one layer of the first signal are in one-to-one correspondence with N first reference signals and there is a quasi co-location (QCL) relationship between each of the N DMRS ports and the corresponding first reference signal (in other words, the N DMRS ports are in one-to-one correspondence with the N first reference signals, and the channel characteristics of any one of the DMRS ports can be obtained from the channel characteristics of the first reference signal corresponding to the DMRS port), N being an integer greater than 1.

In this step, the channel of the first signal refers to the channel over which transmission of the first signal occurs. In case that the first communication device is a network device, the first signal is an uplink signal, e.g., a physical uplink shared channel (PUSCH), physical uplink control channel (PUCCH) or the like. In case that the first communication device is a terminal device, the first signal is a downlink signal, e.g., a PDSCH or PDCCH.

It is noted, the QCL relationship in the embodiments of the present disclosure indicates that there is an association relation between the channels of multiple signals in terms of large-scale properties.

Optionally, the QCL relationship includes one or more of following:
two antenna ports are said to be quasi co-located if the large-scale properties of the channel over which a symbol on one antenna port is conveyed can be inferred from the channel over which a symbol on the other antenna port is conveyed; where, the large-scale properties include one or more of: delay spread, average delay, Doppler spread, Doppler shift, average gain, spatial transmitting (Tx) parameters and spatial receiving (Rx) parameters;
two signals are said to be quasi co-located if the large-scale properties of the channel over which a signal is conveyed can be inferred from the channel over which a symbol of the other signal is conveyed; where, the large-scale properties include one or more of: delay spread, average delay, Doppler spread, Doppler shift, average gain, spatial Tx parameters and spatial Rx parameters;
a signal is said to be quasi co-located with a group of signals if the large-scale properties of the channel of the signal can be inferred jointly from channels of the group of signals; where, the large-scale properties include one or more of: delay spread, average delay, Doppler spread, Doppler shift, average gain, spatial Tx parameters and spatial Rx parameters;
a signal is said to be quasi co-located with a group of signals if the large-scale properties of the channel of the signal can be inferred jointly from a combined channel formed by the channels of the group of signals; where, the large-scale properties include one or more of: delay spread, average delay, Doppler spread, Doppler shift, average gain, spatial Tx parameters and spatial Rx parameters;
an antenna port is said to be quasi co-located with a group of antenna ports if the large-scale properties of the channel over which a symbol on the antenna port is conveyed can be inferred jointly from channels over which symbols on the group of antenna ports are conveyed; where, the large-scale properties include one or more of: delay spread, average delay, Doppler spread, Doppler shift, average gain, spatial Tx parameters and spatial Rx parameters;
an antenna port is said to be quasi co-located with a group of antenna ports if the large-scale properties of the channel over which a symbol on the antenna port is conveyed can be inferred jointly from a combined channel formed by the channels over which symbols on the group of antenna ports are conveyed; where, the large-scale properties include one or more of: delay spread, average delay, Doppler spread, Doppler shift, average gain, spatial Tx parameters and spatial Rx parameters;
a signal is said to be quasi co-located with a group of signals if the large-scale properties of the channel experienced by the signal can be inferred jointly from channels experienced by the group of signals; where, the large-scale properties include one or more of: delay spread, average delay, Doppler spread, Doppler shift, average gain, spatial Tx parameters and spatial Rx parameters;
a signal is said to be quasi co-located with a group of signals if the large-scale properties of the channel experienced by the signal can be inferred jointly from a combined channel formed by the channels experienced by the group of signals; where, the large-scale properties include one or more of: delay spread, average delay, Doppler spread, Doppler shift, average gain, spatial Tx parameters and spatial Rx parameters.

Optionally, the channel characteristics of the first reference signal include a first large-scale property, the QCL relationship is a QCL relationship related to the first large-scale property, and the first large-scale property includes at least one of a delay property, a Doppler property, or a spatial property.

Optionally, the delay property includes at least one of delay spread or average delay.

Optionally, the Doppler property includes at least one of Doppler shift or Doppler spread.

Optionally, the spatial property refers to the beamforming properties of a downlink reception signal, e.g., main angle of arrival, average angle of arrival or the like.

Optionally, the spatial property includes at least one of spatial Tx properties or spatial Rx properties.

Optionally, the spatial Tx properties refer to properties related to transmitting of a beam, and the spatial Rx properties refer to properties related to receiving of a beam.

In an embodiment of the present disclosure, in case that the channel characteristics of the first reference signal include reception beam properties, the first communication device receives the first signal by using the same reception beam as the first reference signal.

Optionally, in case that the first reference signal is a downlink signal, the first signal is an uplink signal, and the channel characteristics in the QCL relationship is spatial beam properties, the first communication device performs the spatial Tx filtering of the first signal by using a same parameter as the spatial Rx filter of the first reference signal.

In the signal communications method according to the embodiments of the present disclosure, each layer of the first signal is associated with N DMRS ports corresponding to the DMRS, the N DMRS ports associated with one layer of the first signal are in one-to-one correspondence with N first reference signals and there is a QCL relationship between each of the N DMRS ports and the corresponding first reference signal; when signals corresponding to multiple DMRS ports are transmitted through different TRPs, the channel estimation for the first signal may be performed by using different first reference signals, in this way, the channel large-scale properties may be estimated for each of the TRPs independently, and thus a better demodulation performance can be obtained; furthermore, the first signal may be received accurately according to the channel characteristics of the first reference signal, which facilitates a better signal demodulation performance.

Optionally, the first signal includes a plurality of layers, and DMRS ports associated with one layer of the plurality of layers are different from DMRS ports associated with another layer of the plurality of layers.

As an optional implementation, the DMRS ports associated with one layer of the plurality of layers are completely different from the DMRS ports associated with any other layer of the plurality of layers.

Optionally, the performing the channel estimation for the first signal according to the channel characteristics of the first reference signal includes:
determining, according to channel measurement information of first DMRS ports and channel characteristics of second reference signals, a channel estimation value of a first layer of the first signal;
where, the first DMRS ports are DMRS ports associated with the first layer of the first signal, the second reference signals are the first reference signals having the QCL relationship with the first DMRS ports, and the first layer of the first signal is any one layer of the first signal.

Specifically, the first large-scale properties of the channels of the first DMRS ports are determined according to the channel measurement information of the second reference signals, and the channel estimation value of the first layer of the first signal is determined according to the channel estimation values of the first DMRS ports and the first large-scale properties of the channels of the first DMRS ports.

Further, optionally, the determining, according to the channel measurement information of the first DMRS ports and the channel characteristics of the second reference signals, the channel estimation value of the first layer of the first signal includes:
determining, according to the channel measurement information of each of the first DMRS ports and the channel characteristics of the second reference signal corresponding to the each first DMRS port, a first channel estimation value of the first layer of the first signal; and
obtaining the channel estimation value of the first layer of the first signal by summing all the first channel estimation values corresponding to the first DMRS ports.

Specifically, the first channel estimation value of the first layer of the first signal is obtained according to the channel estimation value of each of the first DMRS ports and the first large-scale properties of the channel of the first DMRS port.

Optionally, transmission of each layer of the first signal is performed through at least two TRPs, and transmission of a signal corresponding to one DMRS port of the DMRS ports is performed through one TRP of the at least two TRPs or a group of TRPs of the at least two TRPs.

Further, optionally, different DMRS ports associated with one layer of the first signal correspond to different TRPs or TRP groups.

Optionally, the TRPs for the transmission of the first signal are divided into two groups, where the TRPs with a beam direction same as the train travelling direction are grouped into one group, while the TRPs with a beam direction opposite to the train travelling direction are grouped into the other group.

Optionally, the method according to an embodiment of the present disclosure further includes: sending or receiving the QCL relationship between the DMRS ports and the first reference signals through a TCI state.

Here, in case that the first communication device is a terminal, the QCL relationship between the DMRS ports and the first reference signals are received through a TCI state; in case that the first communication device is a base station, the QCL relationship between the DMRS ports and the first reference signals are sent through a TCI state.

In the related art, the QCL relationship between reference signals may be configured through a transmission configuration indicator (TCI) state in the following manner:
{RS1 | QCL-Type1, RS2 | QCL-Type2} or {RS1 | QCL-Type1},
where RS1 and RS2 are identifier information of downlink reference signals, QCL-Type1 and QCL-Type2 are QCL types. Each TCI state may include one or two downlink reference signals, and corresponding QCL types. The downlink reference signal configured in the TCI state may be a synchronization signal and PBCH block (SSB) or a channel state information reference signal (CSI-RS). If a reference signal is configured with a TCI state, its QCL source signal and QCL type may be determined from the configuration of the TCI state.

It is noted, if the TCI state in the related art includes two QCL types, QCL parameters corresponding to the two QCL types may not overlap with each other. For example, type A corresponds to Doppler shift, Doppler spread, average delay and delay spread, and type D corresponds to spatial Rx parameter. These two QCL types do not overlap, and thus may form a feasible QCL type combination. Type A overlaps with both type B and type C in terms of large-scale parameters, and thus type A may not present together with type B or C in the same TCI state. In addition, two reference signals in the TCI state may be the same reference signal, in this case, the QCL types corresponding to the two reference signals may not be the same.

For example, QCL information of type A and type D of DMRS for the PDSCH may be obtained from TRS and CSI-RS for beam management respectively. If TRS is used as the reference signal of QCL type A of DMRS, and CSI-RS for beam management is used as the reference signal of QCL type D of DMRS, the TCI state should be:
{CSI-RS0 | QCL Type A, CSI-RS1 | QCL Type D};
where the CSI-RS0 is a CSI-RS for the TRS function, and the CSI-RS 1 is the CSI-RS for beam management.

Optionally, the type of the channel characteristics is indicated by the QCL type in the TCI state, and the QCL type includes, but is not limited to:
QCL-TypeA: {Doppler shift, Doppler spread, average delay, delay spread};
QCL-TypeB: {Doppler shift, Doppler spread};
QCL-TypeC: {Doppler shift, average delay};
QCL-TypeD: {spatial Rx parameter};
QCL-TypeE: {average delay, delay spread};
QCL-TypeF: {Doppler spread};
QCL-TypeG: {spatial Tx parameter};
QCL-TypeH: {spatial related parameter}.

Doppler shift and Doppler spread are Doppler properties, and average delay and delay spread are time-domain properties.

Optionally, references signals included by different TCI states are conveyed via different TRPs or TRP groups.

Optionally, the TCI state includes information for indicating characteristics other than the QCL type being the aforementioned first large-scale properties.

As an optional implementation, the sending or receiving the QCL relationship between the DMRS ports and the first reference signals through the TCI state includes: sending or receiving N TCI states corresponding to the first signal, where each TCI state of the N TCI states is used for indicating a QCL relationship between one or more DMRS ports of the DMRS ports and a third reference signal, the third reference signal includes the first reference signal, and different TCI states of the TCI states correspond to different respective DMRS ports.

In this implementation, the QCL type included in each TCI state is the same as or different from the QCL type included in another TCI state. Optionally, the third reference signal further includes a fourth reference signal other than the first reference signal.

Optionally, a mapping relationship between TCI states and DMRS ports is: the n^{th} TCI state corresponds to the DMRS port with the n^{th} smallest serial number in the DMRS ports of any one layer.

Optionally, a mapping relationship between TCI states and DMRS ports is: the n^{th} TCI state corresponds to the DMRS port with the n^{th} largest serial number in the DMRS ports of any one layer.

The following examples are given by assuming N=2.

Example 1: the first large-scale property includes Doppler shift, Doppler spread, average delay, delay spread. The configuration of the TCI state is shown in table 1:

**Table 1**

| TCI state 1 | TCI state 2 |
|---|---|
| RS1 \| QCL-TypeA | RS2 \| QCL-TypeA |

where RS1 and RS2 are reference signals, QCL-TypeA is a QCL type, RS1 | QCL-TypeA represents that there is a QCL relationship between the channel of RS1 and the channel of the first DMRS port in terms of the following large-scale properties {Doppler shift, Doppler spread, average delay, delay spread}, and RS2 | QCL-TypeA represents that there is a QCL relationship between the channel of RS2 and the channel of the second DMRS port in terms of the following large-scale properties {Doppler shift, Doppler spread, average delay, delay spread}.

Example 2: the first large-scale property includes Doppler shift, Doppler spread, average delay, delay spread. The configuration of the TCI state is shown in table 2:

**Table 2**

| TCI state 1 | TCI state 2 |
|---|---|
| RS1 \| QCL-TypeA | RS2 \| QCL-TypeA |
| RS3 \| QCL-TypeD | |

where RS3 may be the same as or different from RS1.

RS1, RS2 and RS3 are reference signals, QCL-TypeA and QCL-TypeD are QCL types, RS1 | QCL-TypeA represents that there is a QCL relationship between the channel of RS1 and the channel of the first DMRS port in terms of the following large-scale properties {Doppler shift, Doppler spread, average delay, delay spread}, RS3 | QCL-TypeD represents that there is a QCL relationship between the channel of RS3 and the first signal in terms of the following large-scale property {spatial RX parameter}, and RS2 | QCL-TypeA represents that there is a QCL relationship between the channel of RS2 and the channel of the second DMRS port in terms of the following large-scale properties {Doppler shift, Doppler spread, average delay, delay spread}.

Optionally, there is a QCL relationship between the channel of RS1 and the channel of the first DMRS port in terms of the following large-scale properties {Doppler shift, Doppler spread, average delay, delay spread}, there is a QCL relationship between the channel of RS2 and the channel of the second DMRS port in terms of the following large-scale properties {Doppler shift, Doppler spread, average delay, delay spread}, and there is a QCL relationship between the channel of RS3 and the channel of the first signal in terms of spatial RX parameter.

Example 3: the first large-scale property includes Doppler shift, Doppler spread. The configuration of the TCI state is shown in table 3:

**Table 3**

| TCI state 1 | TCI state 2 |
|---|---|
| RS1 \| QCL-TypeB | RS2 \| QCL-TypeB |

where RS1 and RS2 are reference signals, QCL-TypeB is a QCL type.

RS1 | QCL-TypeB represents that there is a QCL relationship between the channel of RS1 and the channel of the first DMRS port in terms of the following large-scale properties {Doppler shift, Doppler spread}, and RS2 | QCL-TypeB represents that there is a QCL relationship between the channel of RS2 and the channel of the second DMRS port in terms of the following large-scale properties {Doppler shift, Doppler spread}.

Example 4: the first large-scale property includes Doppler spread. The configuration of the TCI state is shown in table 4:

**Table 4**

| TCI state 1 | TCI state 2 |
|---|---|
| RS1 \| QCL-TypeF | RS2 \| QCL-TypeF |

where RS1 and RS2 are reference signals, QCL-TypeF is a QCL type.

RS1 | QCL-TypeF represents that there is a QCL relationship between the channel of RS1 and the channel of the first DMRS port in terms of the following large-scale property {Doppler spread}, and RS2 | QCL-TypeF represents that there is a QCL relationship between the channel of RS2 and the channel of the second DMRS port in terms of the following large-scale property {Doppler spread}.

Example 5: the first large-scale property includes Doppler shift, Doppler spread. Some TCI state indicates other QCL type at the same time. The configuration of the TCI state is shown in table 5:

**Table 5**

| TCI state 1 | TCI state 2 |
|---|---|
| RS1 \| QCL-TypeB | RS2 \| QCL-TypeB |
| RS3 \| QCL-TypeD | |

where RS1, RS2 and RS3 are reference signals, QCL-TypeB and QCL-TypeD are QCL types.

RS1 | QCL-TypeB represents that there is a QCL relationship between the channel of RS1 and the channel of the first DMRS port in terms of the following large-scale properties {Doppler shift, Doppler spread}, RS3 | QCL-TypeD represents that there is a QCL relationship between the channel of RS3 and the first signal in terms of the following large-scale property {spatial RX parameter}, and RS2 | QCL-TypeB represents that there is a QCL relationship between the channel of RS2 and the channel of the second DMRS port in terms of the following large-scale properties {Doppler shift, Doppler spread}.

Example 6: the first large-scale property includes Doppler shift, Doppler spread, average delay, delay spread, spatial Rx parameter. The configuration of the TCI state is shown in table 6:

**Table 6**

| TCI state 1 | TCI state 2 |
|---|---|
| RS1 \| QCL-TypeA | RS2 \| QCL-TypeA |
| RS3\| QCL-TypeD | RS41 QCL-TypeD |

where RS 1, RS2, RS3 and RS4 are reference signals, QCL-TypeA and QCL-TypeD are QCL types.

RS3 may be the same as or different from RS1, and RS4 may be the same as or different from RS2. RS1 | QCL-TypeA represents that there is a QCL relationship between the channel of RS 1 and the channel of the first DMRS port in terms of the following large-scale properties {Doppler shift, Doppler spread, average delay, delay spread}, RS2 | QCL-TypeA represents that there is a QCL relationship between the channel of RS2 and the channel of the second DMRS port in terms of the following large-scale properties {Doppler shift, Doppler spread, average delay, delay spread}, RS3 | QCL-TypeD represents that there is a QCL relationship between the channel of RS 1 and the channel of the first DMRS port in terms of the following large-scale property {spatial RX parameter}, and RS4 | QCL-TypeD represents that there is a QCL relationship between the channel of RS2 and the channel of the second DMRS port in terms of the following large-scale property {spatial RX parameter}.

As another optional implementation, the sending or receiving the QCL relationship between the DMRS ports and the first reference signals through the TCI state includes: sending or receiving M TCI states corresponding to the first signal, where at least one of the M TCI states includes identifier information used for indicating the N first reference signals and information used for indicating a QCL type corresponding to the N first reference signals, and different TCI states include different respective QCL types, M being an integer greater than 1.

Optionally, a mapping relationship between TCI states and DMRS ports is: the n^{th} TCI state corresponds to the DMRS port with the n^{th} smallest serial number in the DMRS ports of any one layer.

Optionally, a mapping relationship between TCI states and DMRS ports is: the n^{th} TCI state corresponds to the DMRS port with the n^{th} largest serial number in the DMRS ports of any one layer.

The following examples are given by assuming M=2.

Example 1: the first large-scale property includes Doppler shift, Doppler spread, average delay, delay spread, spatial Rx parameter. The configuration of the TCI state is shown in table 7:

**Table 7**

| TCI state 1 | TCI state 2 |
|---|---|
| RS1, RS2 \| QCL-TypeA | RS1, RS2 \| QCL-TypeD |

where RS1 and RS2 are reference signals, QCL-TypeA and QCL-TypeD are QCL types.

RS1, RS2 | QCL-TypeA represents that there is a QCL relationship between the channel of RS 1 and the channel of the first DMRS port in terms of the following large-scale properties {Doppler shift, Doppler spread, average delay, delay spread}, and there is a QCL relationship between the channel of RS2 and the channel of the second DMRS port in terms of the following large-scale properties {Doppler shift, Doppler spread, average delay, delay spread}. RS 1, RS2 | QCL-TypeD represents that there is a QCL relationship between the channel of RS 1 and the channel of the first signal in terms of spatial Rx parameter, and there is a QCL relationship between the channel of RS2 and the channel of the first signal in terms of spatial Rx parameter.

Example 2: the first large-scale property includes Doppler shift, Doppler spread, average delay, delay spread. There is other TCI state which indicates QCL type for indicating other large-scale properties. The configuration of the TCI state is shown in table 8:

**Table 8**

| TCI state 1 | TCI state 2 |
|---|---|
| RS1, RS2 \| QCL-TypeA | RS3 \|QCL-TypeD |

where RS1 and RS2 are reference signals, QCL-TypeA and QCL-TypeD are QCL types.

RS1, RS2 | QCL-TypeA represents that there is a QCL relationship between the channel of RS1 and the channel of the first DMRS port in terms of the following large-scale properties {Doppler shift, Doppler spread, average delay, delay spread}, and there is a QCL relationship between the channel of RS2 and the channel of the second DMRS port in terms of the following large-scale properties {Doppler shift, Doppler spread, average delay, delay spread}. RS3 | QCL-TypeD represents that there is a QCL relationship between the channel of RS3 and the channel of the first signal in terms of spatial Rx parameter.

Example 3: the first large-scale property includes Doppler shift, Doppler spread. The configuration of the TCI state is shown in table 9:

**Table 9**

| TCI state 1 |
|---|
| RS1, RS2 \| QCL-TypeB |

where RS 1 and RS2 are reference signals, QCL-TypeB is a QCL type.

RS1, RS2 | QCL-TypeB represents that there is a QCL relationship between the channel of RS 1 and the channel of the first DMRS port in terms of the following large-scale properties {Doppler shift, Doppler spread}, and there is a QCL relationship between the channel of RS2 and the channel of the second DMRS port in terms of the following large-scale properties {Doppler shift, Doppler spread}.

Example 4: the first large-scale property includes: Doppler spread. The configuration of the TCI state is shown in table 10:

**Table 10**

| TCI state 1 |
|---|
| RS1, RS2 \| QCL-TypeF |

where RS1 and RS2 are reference signals, QCL-TypeF is a QCL type.

RS1, RS2 | QCL-TypeF represents that there is a QCL relationship between the channel of RS1 and the channel of the first DMRS port in terms of the following large-scale property {Doppler spread}, and there is a QCL relationship between the channel of RS2 and the channel of the second DMRS port in terms of the following large-scale property {Doppler spread}.

Example 5: the first large-scale property includes Doppler shift, Doppler spread. There is other TCI state which indicates QCL type for indicating other large-scale properties. The configuration of the TCI state is shown in table 11:

**Table 11**

| TCI state 1 | TCI state 2 |
|---|---|
| RS1, RS2 \| QCL-TypeB | RS3, RS4, RSS \| QCL-TypeD |

where RS1, RS2, RS3, RS4 and RS5 are reference signals, QCL-TypeB and QCL-TypeD are QCL types.

RS1, RS2 | QCL-TypeB represents that there is a QCL relationship between the channel of RS1 and the channel of the first DMRS port in terms of the following large-scale properties {Doppler shift, Doppler spread}, and there is a QCL relationship between the channel of RS2 and the channel of the second DMRS port in terms of the following large-scale properties {Doppler shift, Doppler spread}. RS3, RS4, RSS | QCL-TypeD represents that there is a QCL relationship between the channels of RS3, RS4, RS5 and the channel of the first signal in terms of spatial Rx parameter.

The signal communications method according to the embodiments of the present disclosure is described hereinafter with reference to specific embodiments.

### Embodiment 1

A base station indicates, by means of P TCI states, to UE a reference signal quasi co-located (QCLed) with a channel of the DMRS port. P is an integer greater than or equal to 1, e.g., P=1, or P=2, or P=3, or P=4, or the like.

Optionally, the QCL relationship is a QCL relationship related to the first large-scale property, e.g., the first large-scale property includes Doppler shift and Doppler spread, and the corresponding QCL type is QCL-type B.

Optionally, each TCI state includes an indication of a QCL type and a reference signal corresponding to the QCL type, where the QCL type is used for indicating the first large-scale property.

Optionally, in each TCI state, there is only one reference signal for one QCL type.

Optionally, each TCI state is associated with any one layer of a PDSCH.

Optionally, for each layer of the PDSCH, any one reference signal for indicating a QCL type in each TCI state has a QCL relationship indicated by the QCL type with one DMRS port to which the layer is mapped.

Optionally, each TCI state includes indication information of a QCL type and indication information of a reference signal corresponding to the QCL type.

Optionally, the quantity of TCI states is the same as the quantity of DMRS ports to which one layer of the PDSCH is mapped. For example, if each layer of the PDSCH is mapped to two DMRS ports, then there is two TCI states.

For example, the base station indicates, by means of 2 TCI states, to LTE a QCL relationship between the DMRS ports and the first reference signals. The first TCI state is associated with the first DMRS port of any one layer of the PDSCH, and the second TCI state is associated with the second DMRS port of any one layer of the PDSCH. The TCI states are as shown in table 12:

**Table 12**

| TCI state 1 | TCI state 2 |
|---|---|
| RS1 \| QCL-TypeA | RS2 \| QCL-TypeA |

The base station transmits the downlink signal and the DMRS of the downlink signal to the UE. Any one layer of the downlink signal is mapped to N DMRS ports. For example, the PDSCH includes two layers: layer 1 and layer 2, and the two layers are mapped to DMRS ports 1, 2 and DMRS ports 3, 4, respectively.

Optionally, the downlink signal is transmitted from multiple TRPs, and the signal corresponding to each DMRS port is transmitted from one of the TRPs. The reference signal in each TCI state is transmitted from one of the TRPs that transmits the DMRS port associated with the reference signal.

In the above example, optionally, there is a QCL-TypeA relationship between RS 1 and the DMRS port 1 corresponding to layer 1 of the PDSCH, there is a QCL-TypeA relationship between RS 1 and the DMRS port 3 corresponding to layer 2 of the PDSCH, there is a QCL-TypeA relationship between RS2 and the DMRS port 2 corresponding to layer 1 of the PDSCH, and there is a QCL-TypeA relationship between RS 1 and the DMRS port 4 corresponding to layer 2 of the PDSCH.

The UE receives the reference signals, the downlink signal and DMRS of the downlink signal.

For each layer of the downlink signal, the LTE determines the channel estimation value of the layer according to the channel measurements of the DMRS ports to which the layer is mapped and the channel measurements of the reference signals having the QCL relationship with these DMRS ports.

Optionally, the LTE obtains, according to the reference signals indicated by various TCI states, the large-scale properties corresponding to the QCL types indicated by the TCI states for the reference signals. For example, the LTE performs channel estimation for RS1 and RS2 to obtain following parameters of the channels of RS 1 and RS2: Doppler shift, Doppler spread, average delay, delay spread, deems the parameters Doppler shift, Doppler spread, average delay, delay spread of the channel of RS 1 as Doppler shift, Doppler spread, average delay, delay spread of the channels of DMRS port 1 and DMRS port 3, and deems the parameters Doppler shift, Doppler spread, average delay, delay spread of the channel of RS2 as Doppler shift, Doppler spread, average delay, delay spread of the channels of DMRS port 2 and DMRS port 4. For each layer of the downlink signal, the UE determines the channel estimation value of the layer according to the channel estimation values of the DMRS ports to which the layer is mapped, estimation values of Doppler shift, Doppler spread, average delay, delay spread and the like.

### Embodiment 2

The first large-scale property includes multiple large-scale properties, for example, delay parameter and Doppler parameter. Different large-scale properties correspond to the same reference signal or different reference signals.

For example, the base station indicates, by means of 2 TCI states, to UE reference signals having a QCL relation with the DMRS ports. The first TCI state is used for indicating the reference signal whose QCL type corresponds to the delay parameter and Doppler parameter (e.g., QCL type is QCL-type A), and the second TCI state is used for indicating the reference signal whose QCL type corresponds to spatial Rx parameter (e.g., QCL type is QCL-type D). The TCI states are as shown in table 13:

**Table 13**

| TCI state 1 | TCI state 2 |
|---|---|
| RS1, RS2 \| QCL-TypeA | RS3, RS4 \| QCL-TypeD |

where RS3 may be the same as or different from RS1, and RS4 may be the same as or different from RS2.

Optionally, each TCI state includes indication information of a QCL type and indication information of a reference signal corresponding to the QCL type.

Optionally, in each TCI state, a quantity of reference signals of one QCL type is the same as the quantity of DMRS ports to which one layer of the PDSCH is mapped. For example, each layer of the PDSCH is mapped to two DMRS ports.

The base station transmits the downlink signal and the DMRS of the downlink signal to the UE. Any one layer of the downlink signal is mapped to N DMRS ports. For example, the PDSCH includes two layers: layer 1 and layer 2, and the two layers are mapped to DMRS ports 1, 2 and DMRS ports 3, 4, respectively.

Optionally, each TCI state is associated with any one layer of the PDSCH. Optionally, for each layer of the PDSCH, the reference signal of the QCL type indicated by each TCI state has a QCL relationship indicated by the QCL type with one DMRS port to which the layer is mapped. In the above example, there is a QCL-TypeA relationship between RS1 and the DMRS port 1 corresponding to layer 1 of the PDSCH, there is a QCL-TypeA relationship between RS1 and the DMRS port 3 corresponding to layer 2 of the PDSCH, there is a QCL-TypeA relationship between RS2 and the DMRS port 2 corresponding to layer 1 of the PDSCH, and there is a QCL-TypeA relationship between RS2 and the DMRS port 4 corresponding to layer 2 of the PDSCH; there is a QCL-TypeD relationship between RS3 and the DMRS port 1 corresponding to layer 1 of the PDSCH, there is a QCL-TypeD relationship between RS3 and the DMRS port 3 corresponding to layer 2 of the PDSCH, there is a QCL-TypeD relationship between RS4 and the DMRS port 2 corresponding to layer 1 of the PDSCH, and there is a QCL-TypeD relationship between RS4 and the DMRS port 4 corresponding to layer 2 of the PDSCH.

The UE receives the reference signals, the downlink signal and DMRS of the downlink signal.

For each layer of the downlink signal, the LTE determines the channel estimation value of the layer according to the channel measurements of the DMRS ports to which the layer is mapped and the channel measurements of the reference signals having the QCL relationship with these DMRS ports.

Optionally, the LTE obtains, according to the reference signals indicated by various TCI states, the large-scale properties corresponding to the QCL types indicated by the TCI states for the reference signals. For example, the LTE performs channel estimation for RS1 and RS2 to obtain following parameters of the channels of RS 1 and RS2: Doppler shift, Doppler spread, average delay, delay spread, deems the parameters Doppler shift, Doppler spread, average delay, delay spread of the channel of RS 1 as Doppler shift, Doppler spread, average delay, delay spread of the channels of DMRS port 1 and DMRS port 3, and deems the parameters Doppler shift, Doppler spread, average delay, delay spread of the channel of RS2 as Doppler shift, Doppler spread, average delay, delay spread of the channels of DMRS port 2 and DMRS port 4. The UE receives RS3 and RS4 to obtain following parameters of RS3 and RS4: spatial Rx parameter, deems the spatial Rx parameter of RS3 as the spatial Rx parameter of DMRS port 1 and DMRS port 3, and deems the spatial Rx parameter of RS4 as the spatial Rx parameter of DMRS port 2 and DMRS port 4.

For each layer of the downlink signal, the LTE determines the channel estimation value of the layer according to the channel estimation values of the DMRS ports to which the layer is mapped, estimation values of Doppler shift, Doppler spread, average delay, delay spread, the spatial Rx parameter and the like.

### Embodiment 3

A base station indicates, by means of P TCI states, to UE a reference signal QCLed with a channel of the DMRS port. P is an integer greater than or equal to 1, e.g., P=1, or P=2, or P=3, or P=4, or the like.

Optionally, the QCL relationship is a QCL relationship related to the first large-scale property, e.g., the first large-scale property includes Doppler shift and Doppler spread, and the corresponding QCL type is QCL-type B.

Optionally, each TCI state includes an indication of a QCL type and a reference signal corresponding to the QCL type, where the QCL type is used for indicating the first large-scale property.

Optionally, in each TCI state, there is only one reference signal for one QCL type.

Optionally, each TCI state is associated with any one layer of a PDSCH.

Optionally, for each layer of the PDSCH, any one reference signal for indicating a QCL type in each TCI state has a QCL relationship indicated by the QCL type with one DMRS port to which the layer is mapped.

Optionally, each TCI state includes indication information of a QCL type and indication information of a reference signal corresponding to the QCL type.

Optionally, a quantity of TCI states is the same as the quantity of DMRS ports to which one layer of the PDSCH is mapped. For example, if each layer of the PDSCH is mapped to two DMRS ports, then there is two TCI states.

For example, the base station indicates, by means of 2 TCI states, to LTE a QCL relationship between the DMRS ports and the first reference signals. The first TCI state is associated with the first DMRS port of any one layer of the PDSCH, and the second TCI state is associated with the second DMRS port of any one layer of the PDSCH. The TCI states are as shown in table 14:

**Table 14**

| TCI state 1 | TCI state 2 |
|---|---|
| RS1 \| QCL-TypeA | RS2 \| QCL-TypeA |

The UE transmits the uplink signal and the DMRS of the uplink signal to the base station. Any one layer of the uplink signal is mapped to N DMRS ports. For example, the PUSCH includes two layers: layer 1 and layer 2, and the two layers are mapped to DMRS ports 1, 2 and DMRS ports 3, 4, respectively.

Optionally, the uplink signal is transmitted from multiple antenna panels, and the signal corresponding to each DMRS port is transmitted from one of the panels. The reference signal in each TCI state is transmitted from one of the panels that transmits the DMRS port associated with the reference signal.

In the above example, optionally, there is a QCL-TypeA relationship between the channel of RS 1 and the DMRS port 1 corresponding to layer 1 of the PUSCH, there is a QCL-TypeA relationship between the channel of RS1 and the DMRS port 3 corresponding to layer 2 of the PUSCH, there is a QCL-TypeA relationship between the channel of RS2 and the DMRS port 2 corresponding to layer 1 of the PUSCH, and there is a QCL-TypeA relationship between the channel of RS2 and the DMRS port 4 corresponding to layer 2 of the PUSCH.

The base station receives the reference signals, the uplink signal and DMRS of the uplink signal.

For each layer of the uplink signal, the base station determines the channel estimation value of the layer according to the channel measurements of the DMRS ports to which the layer is mapped and the channel measurements of the reference signals having the QCL relationship with these DMRS ports.

Optionally, the base station performs channel estimation for RS 1 and RS2 to obtain following parameters of the channels of RS 1 and RS2: Doppler shift, Doppler spread, average delay, delay spread, deems the parameters Doppler shift, Doppler spread, average delay, delay spread of the channel of RS 1 as Doppler shift, Doppler spread, average delay, delay spread of the channels of DMRS port 1 and DMRS port 3, and deems the parameters Doppler shift, Doppler spread, average delay, delay spread of the channel of RS2 as Doppler shift, Doppler spread, average delay, delay spread of the channels of DMRS port 2 and DMRS port 4. For each layer of the uplink signal, the base station determines the channel estimation value of the layer according to the channel estimation values of the DMRS ports to which the layer is mapped, estimation values of Doppler shift, Doppler spread, average delay, delay spread and the like.

In the signal communications method according to the embodiments of the present disclosure, each layer of the first signal is associated with N DMRS ports corresponding to the DMRS, the N DMRS ports associated with one layer of the first signal are in a QCL relation with N first reference signals in one-to-one manner; when a signal corresponding to each DMRS port is transmitted through different panels, the channel estimation for the first signal may be performed by using different first reference signals, in this way, the channel large-scale properties may be estimated for each of the panels independently, and thus a better demodulation performance can be obtained; furthermore, the first signal may be received accurately according to the channel characteristics of the first reference signal, which facilitates a better signal demodulation performance.

As shown in Fig. 3, an embodiment of the present disclosure further provides a signal communications method performed by a second communication device which is a terminal or a network device (e.g., base station). The method includes steps 301 and 302.

Step 301: transmitting a first reference signal.

In this step, the first reference signal includes at least one of:
a TRS;
a CSI-RS used for obtaining CSI;
a CSI-RS used for beam management; or,
an SRS.

Step 302: transmitting a first signal and a DMRS associated with the first signal.

Each layer of the first signal is associated with N DMRS ports corresponding to the DMRS, the N DMRS ports associated with one layer of the first signal are in one-to-one correspondence with N first reference signals and there is a QCL relationship between each of the N DMRS ports and the corresponding first reference signal, N being an integer greater than 1.

Optionally, the QCL relationship is a QCL relationship related to a first large-scale property, and the first large-scale property includes at least one of a delay property, a Doppler property, or a spatial property.

Optionally, the delay property includes at least one of delay spread or average delay.

Optionally, the Doppler property includes at least one of Doppler shift or Doppler spread.

Optionally, the spatial property refers to the beamforming properties of a downlink reception signal, e.g., main angle of arrival, average angle of arrival or the like.

Optionally, the spatial property includes at least one of spatial Tx properties or spatial Rx properties.

Optionally, the spatial Tx properties refer to properties related to transmitting of a beam, and the spatial Rx properties refer to properties related to receiving of a beam.

In the signal communications method according to the embodiment of the present disclosure, each layer of the first signal is associated with N DMRS ports corresponding to the DMRS, the N DMRS ports associated with one layer of the first signal are in one-to-one correspondence with N first reference signals and there is a QCL relationship between each of the N DMRS ports and the corresponding first reference signal; when a signal corresponding to each DMRS port is transmitted through different TRPs, the second communication device may perform the channel estimation for the first signal by using different first reference signals, in this way, the channel large-scale properties may be estimated for each of the TRPs independently, and thus a better demodulation performance can be obtained; furthermore, the first signal may be received accurately according to the channel characteristics of the first reference signal, which facilitates a better signal demodulation performance.

Optionally, the first signal includes a plurality of layers, and DMRS ports associated with one layer of the plurality of layers are different from DMRS ports associated with another layer of the plurality of layers.

As an optional implementation, the DMRS ports associated with one layer of the plurality of layers are completely different from the DMRS ports associated with another layer of the plurality of layers.

Optionally, the signal communications method according to the embodiment of the present disclosure further includes: sending or receiving the QCL relationship between the DMRS ports and the first reference signals through a TCI state.

Here, in case that the second communication device is a terminal, QCL relationship between the DMRS ports and the first reference signals are received through a TCI state; in case that the second communication device is a base station, QCL relationship between the DMRS ports and the first reference signals are sent through a TCI state.

Optionally, the sending or receiving the QCL relationship between the DMRS ports and the first reference signals through the TCI state includes: sending or receiving N TCI states corresponding to the first signal, where each TCI state of the N TCI states is used for indicating a QCL relationship between one or more DMRS ports of the DMRS ports and a third reference signal, the third reference signal includes the first reference signal, and different TCI states of the TCI states correspond to different DMRS ports.

Optionally, the sending or receiving the QCL relationship between the DMRS ports and the first reference signals through the TCI state includes: sending or receiving M TCI states corresponding to the first signal, where at least one of the M TCI states includes identifier information used for indicating the N first reference signals and information used for indicating a QCL type corresponding to the N first reference signals, and different TCI states include different QCL types, M being an integer greater than 1.

It is noted, the specific implementation of sending or receiving the QCL relationship between the DMRS ports and the first reference signals through the TCI state is the same as the specific implementation of sending or receiving the QCL relationship between the DMRS ports and the first reference signals through the TCI state in the aforementioned signal communications method performed by the first communication device, and will not be described in detail here.

Optionally, transmission of each layer of the first signal is performed through at least two TRPs, and transmission of a signal corresponding to one DMRS port of the DMRS ports is performed through one TRP of the at least two TRPs or a group of TRPs of the at least two TRPs.

Further, optionally, different DMRS ports associated with one layer of the first signal correspond to different TRPs or different TRP groups.

In the signal communications method according to the embodiment of the present disclosure, each layer of the first signal is associated with N DMRS ports corresponding to the DMRS, the N DMRS ports associated with one layer of the first signal are in one-to-one correspondence with N first reference signals and there is a QCL relationship between each of the N DMRS ports and the corresponding first reference signal; when a signal corresponding to each DMRS port is transmitted through different TRPs, the second communication device may perform the channel estimation for the first signal by using different first reference signals, in this way, the channel large-scale properties may be estimated for each of the TRPs independently, and thus a better demodulation performance can be obtained; furthermore, the first signal may be received accurately according to the channel characteristics of the first reference signal, which facilitates a better signal demodulation performance.

An embodiment of the present disclosure further provides a signal transmission apparatus applied to a first communication device. The signal transmission apparatus includes a memory, a transceiver and a processor, where the memory is configured to store a computer program, the transceiver is configured to send and receive data under the control of the processor, and the processor is configured to read the computer program in the memory to implement following steps:
controlling the transceiver to receive a first reference signal;
controlling the transceiver to receive a DMRS;
determining a reception parameter of a first signal according to channel characteristics of the first reference signal and/or performing a channel estimation for the first signal according to the channel characteristics of the first reference signal;
where each layer of the first signal is associated with N DMRS ports corresponding to the DMRS, the N DMRS ports associated with one layer of the first signal are in one-to-one correspondence with N first reference signals and there is a QCL relationship between each of the N DMRS ports and the corresponding first reference signal, N being an integer greater than 1.

In this step, the channel of the first signal refers to the channel over which transmission of the first signal occurs. In case that the first communication device is a network device, the first signal is an uplink signal, e.g., a PUSCH, PUCCH or the like. In case that the first communication device is a terminal device, the first signal is a downlink signal, e.g., a PDSCH or PDCCH.

It is noted, the QCL relationship in the embodiments of the present disclosure indicates that there is an association relationship between the channels of multiple signals in terms of large-scale properties.

Optionally, the QCL relationship includes one or more of following:
two antenna ports are said to be quasi co-located if the large-scale properties of the channel over which a symbol on one antenna port is conveyed can be inferred from the channel over which a symbol on the other antenna port is conveyed; where, the large-scale properties including one or more of delay spread, average delay, Doppler spread, Doppler shift, average gain, spatial transmitting (Tx) parameters and spatial receiving (Rx) parameters;
two signals are said to be quasi co-located if the large-scale properties of the channel over which a signal is conveyed can be inferred from the channel over which a symbol of the other signal is conveyed; where, the large-scale properties including one or more of delay spread, average delay, Doppler spread, Doppler shift, average gain, spatial Tx parameters and spatial Rx parameters;
a signal is said to be quasi co-located with a group of signals if the large-scale properties of the channel of the signal can be inferred jointly from channels of the group of signals; where, the large-scale properties including one or more of delay spread, average delay, Doppler spread, Doppler shift, average gain, spatial Tx parameters and spatial Rx parameters;
a signal is said to be quasi co-located with a group of signals if the large-scale properties of the channel of the signal can be inferred jointly from a combined channel formed by the channels of the group of signals; where, the large-scale properties including one or more of delay spread, average delay, Doppler spread, Doppler shift, average gain, spatial Tx parameters and spatial Rx parameters;
an antenna port is said to be quasi co-located with a group of antenna ports if the large-scale properties of the channel over which a symbol on the antenna port is conveyed can be inferred jointly from channels over which symbols on the group of antenna ports are conveyed; where, the large-scale properties including one or more of delay spread, average delay, Doppler spread, Doppler shift, average gain, spatial Tx parameters and spatial Rx parameters;
an antenna port is said to be quasi co-located with a group of antenna ports if the large-scale properties of the channel over which a symbol on the antenna port is conveyed can be inferred jointly from a combined channel formed by the channels over which symbols on the group of antenna ports are conveyed; where, the large-scale properties including one or more of delay spread, average delay, Doppler spread, Doppler shift, average gain, spatial Tx parameters and spatial Rx parameters;
a signal is said to be quasi co-located with a group of signals if the large-scale properties of the channel experienced by the signal can be inferred jointly from channels experienced by the group of signals; where, the large-scale properties including one or more of delay spread, average delay, Doppler spread, Doppler shift, average gain, spatial Tx parameters and spatial Rx parameters;
a signal is said to be quasi co-located with a group of signals if the large-scale properties of the channel experienced by the signal can be inferred jointly from a combined channel formed by the channels experienced by the group of signals; where, the large-scale properties including one or more of delay spread, average delay, Doppler spread, Doppler shift, average gain, spatial Tx parameters and spatial Rx parameters.

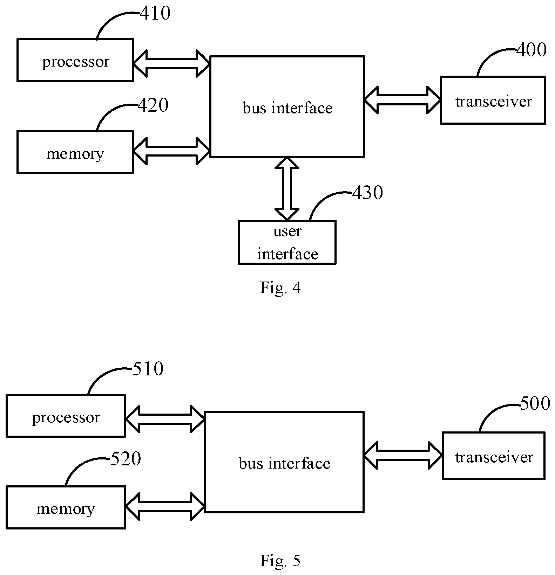

If the first communication device is a terminal, as shown in Fig. 4, the first communication device includes a memory 420, a transceiver 400 and a processor 410. In Fig. 4, a bus architecture may include any number of interconnected buses and bridges, and connects various circuits including one or more processors represented by the processor 410 and memory represented by the memory 420. The bus architecture may also connect various other circuits such as peripherals, voltage regulators and power management circuits, which is well known in the art. Therefore, a detailed description thereof is omitted herein. A bus interface provides an interface. The transceiver 400 may be multiple elements, i.e., a transmitter and a receiver, to allow for communication with various other apparatuses on the transmission medium. These transmission medium includes wireless channel, wired channel, optic fiber or the like. For different user equipment, the user interface 430 may be an interface capable of externally or internally connecting a required device, and the connected device includes, but is not limited to: a keypad, a display, a speaker, a microphone, a joystick and the like.

The processor 410 is responsible for supervising the bus architecture and normal operation and the memory 420 may store the data being used by the processor 410 during operation.

Optionally, the processor 410 may be a central processing unit (CPU), an application specific integrated circuit (ASIC), a field-programmable gate array (FPGA) or a complex programmable logic device (CPLD). The processor may also adopt a multi-core architecture.

The processor invokes a computer program stored in the memory and implements any one method provided in the embodiments of the present disclosure according to the obtained executable instructions. The processor and the memory may also be arranged physically separately.

If the first communication device is a network device, as shown in Fig. 5, the first communication device includes a memory 520, a transceiver 500 and a processor 510. In Fig. 5, a bus architecture may include any number of interconnected buses and bridges, and connects various circuits including one or more processors represented by the processor 510 and memory represented by the memory 520. The bus architecture may also connect various other circuits such as peripherals, voltage regulators and power management circuits, which is well known in the art. Therefore, a detailed description thereof is omitted herein. A bus interface provides an interface. The transceiver 500 may be multiple elements, i.e., a transmitter and a receiver, to allow for communication with various other apparatuses on the transmission medium. These transmission medium includes wireless channel, wired channel, optic fiber or the like. The processor 510 is responsible for supervising the bus architecture and normal operation and the memory 520 may store the data being used by the processor 510 during operation.

The processor 510 may be a CPU, an ASIC, an FPGA or a CPLD. The processor may also adopt a multi-core architecture.

Optionally, the first signal includes a plurality of layers, and DMRS ports associated with one layer of the plurality of layers are different from DMRS ports associated with any other layer of the plurality of layers.

Optionally, the performing the channel estimation for the first signal according to the channel characteristics of the first reference signal includes: determining, according to channel measurement information of first DMRS ports and channel characteristics of second reference signals, a channel estimation value of a first layer of the first signal; where, the first DMRS ports are DMRS ports associated with the first layer of the first signal, the second reference signals are the first reference signals having the QCL relationship with the first DMRS ports, and the first layer of the first signal is any one layer of the first signal.

Specifically, the first large-scale properties of the channels of the first DMRS ports are determined according to the channel measurement information of the second reference signals, and the channel estimation value of the first layer of the first signal is determined according to the channel estimation values of the first DMRS ports and the first large-scale properties of the channels of the first DMRS ports.

Optionally, the determining, according to the channel measurement information of the first DMRS ports and the channel characteristics of the second reference signals, the channel estimation value of the first layer of the first signal includes:
determining, according to the channel measurement information of each of the first DMRS ports and the channel characteristics of the second reference signal corresponding to the first DMRS port, a first channel estimation value of the first layer of the first signal;
obtaining the channel estimation value of the first layer of the first signal by summing all the first channel estimation values corresponding to the first DMRS ports.

Specifically, the first channel estimation value of the first layer of the first signal is obtained according to the channel estimation value of each of the first DMRS ports and the first large-scale properties of the channel of the first DMRS port.

Optionally, transmission of each layer of the first signal is performed through at least two TRPs, and transmission of a signal corresponding to one DMRS port of the DMRS ports is performed through one TRP of the at least two TRPs or a group of TRPs of the at least two TRPs.

Optionally, the processor is further configured to read the computer program in the memory to implement following step: sending or receiving the QCL relationship between the DMRS ports and the first reference signals through a TCI state.

Here, in case that the first communication device is a terminal, QCL relationship between the DMRS ports and the first reference signals are received through a TCI state; in case that the first communication device is a base station, QCL relationship between the DMRS ports and the first reference signals are sent through a TCI state.

Optionally, the sending or receiving the QCL relationship between the DMRS ports and the first reference signals through the TCI state includes: sending or receiving N TCI states corresponding to the first signal, where each TCI state of the N TCI states is used for indicating a QCL relationship between one or more DMRS ports of the DMRS ports and a third reference signal, the third reference signal includes the first reference signal, and different TCI states of the TCI states correspond to different DMRS ports.

Optionally, the sending or receiving the QCL relationship between the DMRS ports and the first reference signals through the TCI state includes: sending or receiving M TCI states corresponding to the first signal, where at least one of the M TCI states includes identifier information used for indicating the N first reference signals and information used for indicating a QCL type corresponding to the N first reference signals, and different TCI states include different QCL types, M being an integer greater than 1.

Optionally, transmission of each layer of the first signal is performed through at least two TRPs, and transmission of a signal corresponding to one DMRS port of the DMRS ports is performed through one TRP of the at least two TRPs or a group of TRPs of the at least two TRPs.

Optionally, different DMRS ports associated with one layer of the first signal correspond to different TRPs or TRP groups.

Optionally, the channel characteristics of the first reference signals include a first large-scale property, the QCL relationship is a QCL relationship related to the first large-scale property, and the first large-scale property includes at least one of a delay property, a Doppler property, or a spatial property.

Optionally, the delay property includes at least one of delay spread or average delay.

Optionally, the Doppler property includes at least one of Doppler shift or Doppler spread.

Optionally, the spatial property refers to the beamforming properties of a downlink reception signal, e.g., main angle of arrival, average angle of arrival or the like.

Optionally, the spatial property includes at least one of spatial Tx properties or spatial Rx properties.

Optionally, the spatial Tx properties refer to properties related to transmitting of a beam, and the spatial Rx properties refer to properties related to receiving of a beam.

In an embodiment of the present disclosure, in case that the channel characteristics of the first reference signal include reception beam properties, the first communication device receives the first signal by using the same reception beam as the first reference signal.

Optionally, the first reference signal includes at least one of:
a TRS;
a CSI-RS used for obtaining CSI;
a CSI-RS used for beam management; or,
an SRS.

It is noted, the apparatus according to the embodiment of the present disclosure can implement all method steps implemented by the aforementioned method embodiment, and can achieve the same technical effects. A detailed description of a part of this embodiment that is same as the method embodiment and its beneficial effects are omitted herein.

An embodiment of the present disclosure further provides a signal transmission apparatus applied to a second communication device. The signal transmission apparatus includes a memory, a transceiver and a processor, where the memory is configured to store a computer program, the transceiver is configured to send and receive data under the control of the processor, and the processor is configured to read the computer program in the memory to implement following steps:
controlling the transceiver to transmit a first reference signal;
controlling the transceiver to transmit a first signal and a DMRS associated with the first signal;
where each layer of the first signal is associated with N DMRS ports corresponding to the DMRS, the N DMRS ports associated with one layer of the first signal are in one-to-one correspondence with N first reference signals and there is a QCL relationship between each of the N DMRS ports and the corresponding first reference signal, N being an integer greater than 1.

Optionally, the first signal includes a plurality of layers, and DMRS ports associated with one layer of the plurality of layers are different from DMRS ports associated with any other layer of the plurality of layers.

As an optional implementation, the DMRS ports associated with one layer of the plurality of layers are completely different from the DMRS ports associated with another layer of the plurality of layers. Optionally, the transceiver is further configured to perform following step:
sending or receiving the QCL relationship between the DMRS ports and the first reference signals through a TCI state.

Here, in case that the second communication device is a terminal, QCL relationship between the DMRS ports and the first reference signals are received through a TCI state; in case that the second communication device is a base station, QCL relationship between the DMRS ports and the first reference signals are sent through a TCI state.

Optionally, the sending or receiving, by the transceiver, the QCL relationship between the DMRS ports and the first reference signals through the TCI state includes: sending or receiving N TCI states corresponding to the first signal, where each TCI state of the N TCI states is used for indicating a QCL relationship between one or more DMRS ports of the DMRS ports and a third reference signal, the third reference signal includes the first reference signal, and different TCI states of the TCI states correspond to different DMRS ports.

Optionally, the sending or receiving, by the transceiver, the QCL relationship between the DMRS ports and the first reference signals through the TCI state includes: sending or receiving M TCI states corresponding to the first signal, where at least one of the M TCI states includes identifier information used for indicating the N first reference signals and information used for indicating a QCL type corresponding to the N first reference signals, and different TCI states include different QCL types, M being an integer greater than 1.

It is noted, the specific implementation of sending or receiving the QCL relationship between the DMRS ports and the first reference signals through the TCI state is the same as the specific implementation of sending or receiving the QCL relationship between the DMRS ports and the first reference signals through the TCI state in the aforementioned signal communications method performed by the first communication device, and will not be described in detail here.

Optionally, transmission of each layer of the first signal is performed through at least two TRPs, and transmission of a signal corresponding to one DMRS port of the DMRS ports is performed through one TRP of the at least two TRPs or a group of TRPs of the at least two TRPs.

Optionally, different DMRS ports associated with one layer of the first signal correspond to different TRPs or TRP groups.

Optionally, the QCL relationship is a QCL relationship related to the first large-scale property, and the first large-scale property includes at least one of a delay property, a Doppler property, or a spatial property.

Optionally, the delay property includes at least one of delay spread or average delay.

Optionally, the Doppler property includes at least one of Doppler shift or Doppler spread.

Optionally, the spatial property refers to the beamforming properties of a downlink reception signal, e.g., main angle of arrival, average angle of arrival or the like.

Optionally, the spatial property includes at least one of spatial Tx properties or spatial Rx properties.

Optionally, the spatial Tx properties refer to properties related to transmitting of a beam, and the spatial Rx properties refer to properties related to receiving of a beam.

Optionally, the first reference signal includes at least one of:
a TRS;
a CSI-RS used for obtaining CSI;
a CSI-RS used for beam management; or,
an SRS.

If the second communication device is a terminal, the signal transmission apparatus has a structure as shown in the schematic structural diagram of Fig. 4; if the second communication device is a network device, the signal transmission apparatus has a structure as shown in the schematic structural diagram of Fig. 5.

It is noted, the apparatus according to the embodiment of the present disclosure can implement all method steps implemented by the aforementioned method embodiment, and can achieve the same technical effects. A detailed description of a part of this embodiment that is same as the method embodiment and its beneficial effects are omitted herein.

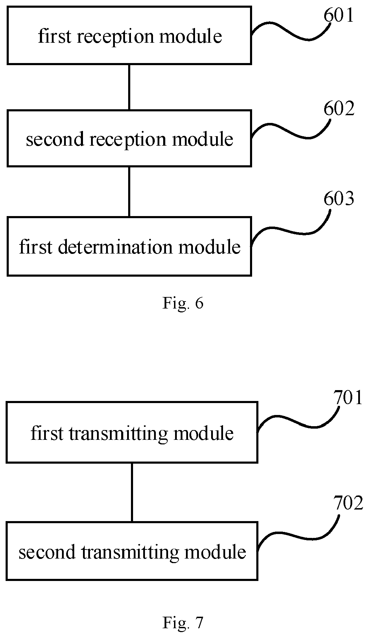

As shown in Fig. 6, an embodiment of the present disclosure further provides a signal transmission apparatus, including:
a first reception module 601, configured to receive a first reference signal;
a second reception module 602, configured to receive a DMRS;
a first determination module 603, configured to determine a reception parameter of a first signal according to channel characteristics of the first reference signal and/or perform a channel estimation for the first signal according to the channel characteristics of the first reference signal;
where each layer of the first signal is associated with N DMRS ports corresponding to the DMRS, the N DMRS ports associated with one layer of the first signal are in one-to-one correspondence with N first reference signals and there is a QCL relationship between each of the N DMRS ports and the corresponding first reference signal, N being an integer greater than 1.

The channel of the first signal refers to the channel over which transmission of the first signal occurs. In case that the first communication device is a network device, the first signal is an uplink signal, e.g., a PUSCH, PUCCH or the like. In case that the first communication device is a terminal device, the first signal is a downlink signal, e.g., a PDSCH or PDCCH.

In the signal transmission apparatus according to the embodiment of the present disclosure, the first signal includes a plurality of layers, and DMRS ports associated with one layer of the plurality of layers are different from DMRS ports associated with another layer of the plurality of layers.

As an optional implementation, the DMRS ports associated with one layer of the plurality of layers are completely different from the DMRS ports associated with another layer of the plurality of layers.

In the signal transmission apparatus according to the embodiment of the present disclosure, the first determination module is configured to determine, according to channel measurement information of first DMRS ports and channel characteristics of second reference signals, a channel estimation value of a first layer of the first signal. The first DMRS ports are DMRS ports associated with the first layer of the first signal, the second reference signals are the first reference signals having the QCL relationship with the first DMRS ports, and the first layer of the first signal is any one layer of the first signal.

Specifically, the first large-scale properties of the channels of the first DMRS ports are determined according to the channel measurement information of the second reference signals, and the channel estimation value of the first layer of the first signal is determined according to the channel estimation values of the first DMRS ports and the first large-scale properties of the channels of the first DMRS ports.

In the signal transmission apparatus according to the embodiment of the present disclosure, the first determination module includes:
a first determination submodule, configured to determine, according to the channel measurement information of each of the first DMRS ports and the channel characteristics of the second reference signal corresponding to the first DMRS port, a first channel estimation value of the first layer of the first signal;
a first obtaining submodule, configured to obtain the channel estimation value of the first layer of the first signal by summing all the first channel estimation values corresponding to the first DMRS ports.

Specifically, the first channel estimation value of the first layer of the first signal is obtained according to the channel estimation value of each of the first DMRS ports and the first large-scale properties of the channel of the first DMRS port.

Optionally, transmission of each layer of the first signal is performed through at least two TRPs, and transmission of a signal corresponding to one DMRS port of the DMRS ports is performed through one TRP of the at least two TRPs or a group of TRPs of the at least two TRPs.

The signal transmission apparatus according to the embodiment of the present disclosure further includes: a first transceiver module, configured to send or receive QCL relationship between the DMRS ports and the first reference signals through a TCI state.

Here, in case that the first communication device is a terminal, QCL relationship between the DMRS ports and the first reference signals are received through a TCI state; in case that the first communication device is a base station, QCL relationship between the DMRS ports and the first reference signals are sent through a TCI state.

In the signal transmission apparatus according to the embodiment of the present disclosure, the first transceiver module is configured to send or receive N TCI states corresponding to the first signal, where each TCI state of the N TCI states is used for indicating a QCL relationship between one or more DMRS ports of the DMRS ports and a third reference signal, the third reference signal includes the first reference signal, and different TCI states of the TCI states correspond to different DMRS ports.

In the signal transmission apparatus according to the embodiment of the present disclosure, the first transceiver module is configured to send or receive M TCI states corresponding to the first signal, where at least one of the M TCI states includes identifier information used for indicating the N first reference signals and information used for indicating a QCL type corresponding to the N first reference signals, and different TCI states include different QCL types, M being an integer greater than 1.

In the signal transmission apparatus according to the embodiment of the present disclosure, transmission of each layer of the first signal is performed through at least two TRPs, and transmission of a signal corresponding to one DMRS port of the DMRS ports is performed through one TRP of the at least two TRPs or a group of TRPs of the at least two TRPs.

In the signal transmission apparatus according to the embodiment of the present disclosure, different DMRS ports associated with one layer of the first signal correspond to different TRPs or TRP groups.

In the signal transmission apparatus according to the embodiment of the present disclosure, the channel characteristics of the first reference signals include a first large-scale property, the QCL relationship is a QCL relationship related to the first large-scale property, and the first large-scale property includes at least one of a delay property, a Doppler property, or a spatial property.

Optionally, the delay property includes at least one of delay spread or average delay.

Optionally, the Doppler property includes at least one of Doppler shift or Doppler spread.

Optionally, the spatial property refers to the beamforming properties of a downlink reception signal, e.g., main angle of arrival, average angle of arrival or the like.

Optionally, the spatial property includes at least one of spatial Tx properties or spatial Rx properties.

Optionally, the spatial Tx properties refer to properties related to transmitting of a beam, and the spatial Rx properties refer to properties related to receiving of a beam.

In an embodiment of the present disclosure, in case that the channel characteristics of the first reference signal include reception beam properties, the first communication device receives the first signal by using the same reception beam as the first reference signal.

In the signal transmission apparatus according to the embodiment of the present disclosure, the first reference signal includes at least one of:
a TRS;
a CSI-RS used for obtaining CSI;
a CSI-RS used for beam management; or,
an SRS.

It is noted, the apparatus according to the embodiment of the present disclosure can implement all method steps implemented by the aforementioned method embodiment, and can achieve the same technical effects. A detailed description of a part of this embodiment that is same as the method embodiment and its beneficial effects are omitted herein.

As shown in Fig. 7, an embodiment of the present disclosure further provides a signal transmission apparatus, including:
a first transmitting module 701, configured to transmit a first reference signal;
a second transmitting module 702, configured to transmit a first signal and a DMRS associated with the first signal;
where each layer of the first signal is associated with N DMRS ports corresponding to the DMRS, the N DMRS ports associated with one layer of the first signal are in one-to-one correspondence with N first reference signals and there is a QCL relationship between each of the N DMRS ports and the corresponding first reference signal, N being an integer greater than 1.

In the signal transmission apparatus according to the embodiment of the present disclosure, the first signal includes a plurality of layers, and DMRS ports associated with one layer of the plurality of layers are different from DMRS ports associated with another layer of the plurality of layers.

As an optional implementation, the DMRS ports associated with one layer of the plurality of layers are completely different from the DMRS ports associated with another layer of the plurality of layers. The signal transmission apparatus according to the embodiment of the present disclosure further includes: a second transceiver module, configured to send or receive QCL relationship between the DMRS ports and the first reference signals through a TCI state.

Here, in case that the second communication device is a terminal, QCL relationship between the DMRS ports and the first reference signals are received through a TCI state; in case that the second communication device is a base station, QCL relationship between the DMRS ports and the first reference signals are sent through a TCI state.

In the signal transmission apparatus according to the embodiment of the present disclosure, the second transceiver module is configured to send or receive N TCI states corresponding to the first signal, where each TCI state of the N TCI states is used for indicating a QCL relationship between one or more DMRS ports of the DMRS ports and a third reference signal, the third reference signal includes the first reference signal, and different TCI states of the TCI states correspond to different DMRS ports.

In the signal transmission apparatus according to the embodiment of the present disclosure, the second transceiver module is configured to send or receive M TCI states corresponding to the first signal, where at least one of the M TCI states includes identifier information used for indicating the N first reference signals and information used for indicating a QCL type corresponding to the N first reference signals, and different TCI states include different QCL types, M being an integer greater than 1.

It is noted, the specific implementation of sending or receiving the QCL relationship between the DMRS ports and the first reference signals through the TCI state is the same as the specific implementation of sending or receiving the QCL relationship between the DMRS ports and the first reference signals through the TCI state in the aforementioned signal communications method performed by the first communication device, and will not be described in detail here.

In the signal transmission apparatus according to the embodiment of the present disclosure, transmission of each layer of the first signal is performed through at least two TRPs, and transmission of a signal corresponding to one DMRS port of the DMRS ports is performed through one TRP of the at least two TRPs or a group of TRPs of the at least two TRPs.

In the signal transmission apparatus according to the embodiment of the present disclosure, different DMRS ports associated with one layer of the first signal correspond to different TRPs or TRP groups.

In the signal transmission apparatus according to the embodiment of the present disclosure, the QCL relationship is a QCL relationship related to the first large-scale property, and the first large-scale property includes at least one of a delay property, a Doppler property, or a spatial property.

Optionally, the delay property includes at least one of delay spread or average delay.

Optionally, the Doppler property includes at least one of Doppler shift or Doppler spread.

Optionally, the spatial property refers to the beamforming properties of a downlink reception signal, e.g., main angle of arrival, average angle of arrival or the like.

Optionally, the spatial property includes at least one of spatial Tx properties or spatial Rx properties.

Optionally, the spatial Tx properties refer to properties related to transmitting of a beam, and the spatial Rx properties refer to properties related to receiving of a beam.

In the signal transmission apparatus according to the embodiment of the present disclosure, the first reference signal includes at least one of:
a TRS;
a CSI-RS used for obtaining CSI;
a CSI-RS used for beam management; or,
an SRS.

It is noted, the apparatus according to the embodiment of the present disclosure can implement all method steps implemented by the aforementioned method embodiment, and can achieve the same technical effects. A detailed description of a part of this embodiment that is same as the method embodiment and its beneficial effects are omitted herein.

It should be noted that the division of units in the embodiments of the present disclosure is illustrative, and is only a logical function division, and there may be another division method in actual implementation. In addition, the functional units in various embodiments of the present disclosure may be integrated into one processing unit, or each unit may exist separately physically, or two or more units may be integrated into one unit. The above-mentioned integrated units can be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present disclosure, or all or a part of the technical solution may be implemented in a form of a software product. The computer software product is stored in a storage medium, and includes several instructions to enable a computer device (which may be a personal computer, a server, or a network device, etc.) or a processor to execute all or part of the steps of the methods described in the various embodiments of the present disclosure. The aforementioned storage media include: a universal serial bus (USB) flash drive, removable hard disk, read-only memory (ROM), random access memory (RAM), magnetic disk, optical disc or other media that can store program codes.

The present disclosure further provides in some embodiments a processor readable storage medium storing a program instruction, where the program instruction is configured to be executed by a processor to implement following steps:
receiving a first reference signal;
receiving a DMRS;
determining a reception parameter of a first signal according to channel characteristics of the first reference signal and/or performing a channel estimation for the first signal according to the channel characteristics of the first reference signal;
where each layer of the first signal is associated with N DMRS ports corresponding to the DMRS, the N DMRS ports associated with one layer of the first signal are in one-to-one correspondence with N first reference signals and there is a QCL relationship between each of the N DMRS ports and the corresponding first reference signal, N being an integer greater than 1.

Or, the program instruction is configured to be executed by a processor to implement following steps:
transmitting a first reference signal;
transmitting a first signal and a DMRS associated with the first signal;
where each layer of the first signal is associated with N DMRS ports corresponding to the DMRS, the N DMRS ports associated with one layer of the first signal are in one-to-one correspondence with N first reference signals and there is a QCL relationship between each of the N DMRS ports and the corresponding first reference signal, N being an integer greater than 1.

When being executed by a processor, the program instruction can implement all implementations in the signal communications method embodiment applied to the first communication device, or implement all implementations in the signal communications method embodiment applied to the second communication device. To avoid repetition, a repeated description is omitted herein.

The terminal device involved in the embodiments of the present disclosure may be a device that provides voice and/or data connectivity to a user, a handheld device with a radio connection function, or other processing devices connected to a radio modem or the like. In different systems, the names of terminal devices may be different. For example, in a 5G system, a terminal device may be called user equipment (UE). Wireless terminal device can communicate with one or more core networks (CNs) via a radio access network (RAN), and wireless terminal device may be mobile terminal device, such as mobile phones (or called "cellular" phones) and computers with mobile terminal device, such as portable, pocket-sized, hand-held, computer built-in or vehicle-mounted mobile apparatuses, which exchange voice and/or data with the radio access network. For example, personal communication service (PCS) phones, cordless phones, session initiated protocol (SIP) phones, wireless local loop (WLL) stations, personal digital assistant (PDA) and other devices. The wireless terminal device may also be called a system, subscriber unit, subscriber station, mobile station, mobile, remote station, access point, remote terminal, access terminal, user terminal, user agent, and user device, which are not limited in the embodiments of the present disclosure.

The network device involved in the embodiments of the present disclosure may be a base station. The base station may include multiple cells that provide services to terminals. Depending on the specific application scenario, the base station may be called access point, or may be a device in the access network that communicates over an air interface with wireless terminal devices through one or more sectors, or may be called other name. The network device may be used for converting the received radio frames into Internet protocol (IP) packets or vice versa, and serves as a router between the wireless terminal devices and the rest of the access network. The rest of the access network may include an IP communication network. The network device may also coordinate the attribute management of the air interface. For example, the network device involved in the embodiments of the present disclosure may be a base transceiver station (BTS) in the global system for mobile communications (GSM) or code division multiple access (CDMA), a NodeB in the wide-band code division multiple access (WCDMA), an evolved Node B (eNB or e-NodeB) in Long Term Evolution (LTE) system, a 5G base station (gNB) in 5G network architecture (next generation system), a home evolved Node B (HeNB), a relay node, a femto, a pico, or the like, which is not limited herein. In some network architectures, the network device may include a centralized unit (CU) node and a distributed unit (DU) node, which may be located geographically separated.

The network device and the terminal device may each perform multi-input multi-output (MIMO) transmission with each other by using one or more antennas. The MIMO transmission may be single user MIMO (SU-MIMO) or multiple user MIMO (MU-MIMO). According to the configuration and quantity of antenna combinations, the MIMO transmission may be two dimensional-MIMO (2D-MIMO), three dimensional-MIMO (3D-MIMO), full dimensional-MIMO (FD-MIMO) or massive-MIMO, and may be diversity transmission, precoded transmission, beam forming transmission, or the like.

A person skilled in the art can understand that embodiments of the present disclosure may be provided as a method, system, or computer program product. Accordingly, the present disclosure may take the form of an entirely hardware embodiment, an entirely software embodiment, or an embodiment combining software and hardware aspects. Furthermore, the present disclosure may take the form of a computer program product configured to be implemented on one or more computer-usable storage media (including but not limited to disk storage, optical storage, etc.) storing computer-usable program codes therein.

The present disclosure is described with reference to flowcharts and/or block diagrams of methods, devices (systems), and computer program products according to the embodiments of the disclosure. It will be understood that each process and/or block in the flowcharts and/or block diagrams, and combinations of processes and/or blocks in the flowcharts and/or block diagrams, can be implemented by computer executable instructions. These computer executable instructions may be provided to the processor of a general-purpose computer, special purpose computer, embedded processor or other programmable data processing device to produce a machine, such that the instructions executed by the processor of the computer or other programmable data processing device produce an apparatus for implementing the functions specified in one or more processes in the flowcharts and/or one or more blocks in the block diagrams.

These processor-executable instructions may also be stored in a processor-readable storage capable of directing a computer or other programmable data processing device to operate in a specific manner, such that the instructions stored in the processor-readable storage produce an article of manufacture including instruction means, the instruction means implements the functions specified in one or more processes of the flowchart and/or one or more blocks of the block diagram.

These processor-executable instructions can also be loaded onto a computer or other programmable data processing device, so that a series of operational steps can be performed on the computer or other programmable device to produce a computer-implemented process, the instructions executed on the computer or other programmable devices thus provide steps for realizing the functions specified in one or more processes of the flowchart and/or one or more blocks of the block diagram.

It may be clearly understood by a person skilled in the art that, for ease of description and conciseness, for a detailed working process of the foregoing system, apparatus, and unit, reference may be made to a corresponding process in the foregoing method embodiments, and details are not described herein again.

In the several embodiments provided in the present application, it should be understood that the disclosed apparatus and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electric, mechanical, or other forms.

The units described as separate parts may or may not be physically separate, and parts displayed as units may or may not be physical units, that is, may be located in one position, or may be distributed on a plurality of network units. A part or all of the units may be selected according to actual needs to achieve the objectives of the solutions of the embodiments.

In addition, functional units in the embodiments of the present disclosure may be integrated into one processing unit, or each of the units may exist alone physically, or two or more units may be integrated into one unit.

From the foregoing description of the implementations, a person skilled in the art will appreciate clearly that the method according to the embodiments may be implemented not only by software in conjunction with necessary generic hardware platform, but also by hardware, although the former will be preferred in most cases. Based on such an understanding, essential parts, or parts contributing to the related art, of the technical solution of the present disclosure may be implemented in a form of a software product. The computer software product is stored in a storage medium (e.g., a ROM/RAM, a magnetic disk and an optical disc) and includes several instructions adapted to be executed by a terminal (such as a handset, a computer, a server, an air conditioner or a network device) to perform the method according to the embodiments of the present disclosure.

It is understood by a person of ordinary skill in the art that all or a part of the flows of the aforementioned methods may be implemented through hardware controlled by computer programs. The programs may be stored in a computer readable storage medium. The programs, when being executed, may include the flows of the embodiments of the aforementioned methods. The storage medium may be a magnetic disk, an optic disc, a ROM or a RAM, etc.

It may be understood that these embodiments described in this disclosure may be implemented by hardware, software, firmware, middleware, microcode or a combination thereof. For hardware implementation, a module, unit, sub-unit may be implemented in one or more ASICs, a digital signal processor (DSP), a digital signal processing device (DSP device, DSPD), a programmable logic device (PLD), a field-programmable gate array (FPGA), a general-purpose processor, a controller, a microcontroller, a microprocessor, other electronic unit configured to perform the functions in the present disclosure or a combination thereof.

For a software implementation, the techniques in embodiments of the present disclosure may be implemented by modules (for example, processes, functions or the like) performing the functions described in embodiments of the present disclosure. Software codes may be stored in a memory and executed by a processor. The memory may be implemented internal or external to a processor.

Obviously, modifications and improvements may be made by a person of ordinary skill in the art without departing from the spirit and scope of the present disclosure, and these modifications and improvements shall be encompassed by the present disclosure if the modifications and improvements fall within the scope of the claims of the present disclosure and equivalents thereof.

## Claims

1. A signal communications method, comprising:
receiving a first reference signal;
receiving a demodulation reference signal (DMRS); and
determining a reception parameter of a first signal according to channel characteristics of the first reference signal and/or performing a channel estimation for the first signal according to the channel characteristics of the first reference signal,
wherein each layer of the first signal is associated with N DMRS ports corresponding to the DMRS, the N DMRS ports associated with one layer of the first signal are in one-to-one correspondence with N first reference signals and there is a quasi co-location (QCL) relationship between each of the N DMRS ports and the corresponding first reference signal, N being an integer greater than 1.

2. The method according to claim 1, wherein the first signal comprises a plurality of layers, and DMRS ports associated with one layer of the plurality of layers are different from DMRS ports associated with another layer of the plurality of layers.

3. The method according to claim 1, wherein the performing the channel estimation for the first signal according to the channel characteristics of the first reference signal comprises:
determining, according to channel measurement information of first DMRS ports and channel characteristics of second reference signals, a channel estimation value of a first layer of the first signal,
wherein, the first DMRS ports are DMRS ports associated with the first layer of the first signal, the second reference signals are the first reference signals having the QCL relationship with the first DMRS ports, and the first layer of the first signal is any one layer of the first signal.

4. The method according to claim 3, wherein the determining, according to the channel measurement information of the first DMRS ports and the channel characteristics of the second reference signals, the channel estimation value of the first layer of the first signal comprises:
determining, according to the channel measurement information of each of the first DMRS ports and the channel characteristics of the second reference signal corresponding to the each first DMRS port, a first channel estimation value of the first layer of the first signal; and
obtaining the channel estimation value of the first layer of the first signal by summing all the first channel estimation values corresponding to the first DMRS ports.

5. The method according to claim 1, further comprising:
sending or receiving the QCL relationship between the DMRS ports and the first reference signals through a transmission configuration indicator (TCI) state.

6. The method according to claim 5, wherein the sending or receiving the QCL relationship between the DMRS ports and the first reference signals through the TCI state comprises:
sending or receiving N TCI states corresponding to the first signal, wherein each TCI state of the N TCI states is used for indicating a QCL relationship between one or more DMRS ports of the DMRS ports and a third reference signal, the third reference signal comprises the first reference signal, and different TCI states of the TCI states correspond to different DMRS ports.

7. The method according to claim 5, wherein the sending or receiving the QCL relationship between the DMRS ports and the first reference signals through the TCI state comprises:
sending or receiving M TCI states corresponding to the first signal,
wherein at least one of the M TCI states comprises identifier information used for indicating the N first reference signals and information used for indicating a QCL type corresponding to the N first reference signals, and different TCI states comprise different QCL types, M being an integer greater than 1.

8. The method according to claim 1, wherein transmission of each layer of the first signal is performed through at least two transmission reception points (TRPs), and transmission of a signal corresponding to one DMRS port of the DMRS ports is performed through one TRP of the at least two TRPs or a group of TRPs of the at least two TRPs.

9. The method according to claim 8, wherein different DMRS ports associated with one layer of the first signal correspond to different TRPs or TRP groups.

10. The method according to claim 1, wherein the channel characteristics comprise a first large-scale property, the QCL relationship is a QCL relationship related to the first large-scale property, and the first large-scale property comprises at least one of a delay property, a Doppler property, or a spatial property.

11. The method according to claim 1, wherein the first reference signal comprises at least one of:
a tracking reference signal (TRS);
a channel state information reference signal (CSI-RS) used for obtaining channel state information (CSI);
a CSI-RS used for beam management; or,
a sounding reference signal (SRS).

12. A signal communications method, comprising:
transmitting a first reference signal; and
transmitting a first signal and a demodulation reference signal (DMRS) associated with the first signal,
wherein each layer of the first signal is associated with N DMRS ports corresponding to the DMRS, the N DMRS ports associated with one layer of the first signal are in one-to-one correspondence with N first reference signals and there is a QCL relationship between each of the N DMRS ports and the corresponding first reference signal, N being an integer greater than 1.

13. The method according to claim 12, wherein the first signal comprises a plurality of layers, and DMRS ports associated with one layer of the plurality of layers are different from DMRS ports associated with another layer of the plurality of layers.

14. The method according to claim 12, further comprising:
sending or receiving the QCL relationship between the DMRS ports and the first reference signals through a transmission configuration indicator (TCI) state.

15. The method according to claim 14, wherein the sending or receiving the QCL relationship between the DMRS ports and the first reference signals through the TCI state comprises:
sending or receiving N TCI states corresponding to the first signal, wherein each TCI state of the N TCI states is used for indicating a QCL relationship between one or more DMRS ports of the DMRS ports and a third reference signal, the third reference signal comprises the first reference signal, and different TCI states of the TCI states correspond to different DMRS ports.

16. The method according to claim 14, wherein the sending or receiving the QCL relationship between the DMRS ports and the first reference signals through the TCI state comprises:
sending or receiving M TCI states corresponding to the first signal,
wherein at least one of the M TCI states comprises identifier information used for indicating the N first reference signals and information used for indicating a QCL type corresponding to the N first reference signals, and different TCI states comprise different QCL types, M being an integer greater than 1.

17. The method according to claim 12, wherein transmission of each layer of the first signal is performed through at least two TRPs, and transmission of a signal corresponding to one DMRS port of the DMRS ports is performed through one TRP of the at least two TRPs or a group of TRPs of the at least two TRPs.

18. The method according to claim 17, wherein different DMRS ports associated with one layer of the first signal correspond to different TRPs or TRP groups.

19. The method according to claim 12, wherein the QCL relationship is a QCL relationship related to a first large-scale property, and the first large-scale property comprises at least one of a delay property, a Doppler property, or a spatial property.

20. The method according to claim 12, wherein the first reference signal comprises at least one of:
a tracking reference signal (TRS);
a channel state information reference signal (CSI-RS) used for obtaining channel state information (CSI);
a CSI-RS used for beam management; or,
a sounding reference signal (SRS).

21. A signal transmission apparatus, comprising a memory, a transceiver and a processor, wherein the memory is configured to store a computer program, the transceiver is configured to send and receive data under the control of the processor, and the processor is configured to read the computer program in the memory to implement following steps:
controlling the transceiver to receive a first reference signal;
controlling the transceiver to receive a demodulation reference signal (DMRS); and
determining a reception parameter of a first signal according to channel characteristics of the first reference signal and/or performing a channel estimation for the first signal according to the channel characteristics of the first reference signal;
wherein each layer of the first signal is associated with N DMRS ports corresponding to the DMRS, the N DMRS ports associated with one layer of the first signal are in one-to-one correspondence with N first reference signals and there is a QCL relationship between each of the N DMRS ports and the corresponding first reference signal, N being an integer greater than 1.

22. The signal transmission apparatus according to claim 21, wherein the first signal comprises a plurality of layers, and DMRS ports associated with one layer of the plurality of layers are different from DMRS ports associated with another layer of the plurality of layers.

23. The signal transmission apparatus according to claim 21, wherein the determining the reception parameter of the first signal according to the channel characteristics of the first reference signal and/or performing the channel estimation for the first signal according to the channel characteristics of the first reference signal comprises:
determining, according to channel measurement information of first DMRS ports and channel characteristics of second reference signals, a channel estimation value of a first layer of the first signal,
wherein, the first DMRS ports are DMRS ports associated with the first layer of the first signal, the second reference signals are the first reference signals having the QCL relationship with the first DMRS ports, and the first layer of the first signal is any one layer of the first signal.

24. The signal transmission apparatus according to claim 23, wherein the determining, according to the channel measurement information of the first DMRS ports and the channel characteristics of the second reference signals, the channel estimation value of the first layer of the first signal comprises:
determining, according to the channel measurement information of each of the first DMRS ports and the channel characteristics of the second reference signal corresponding to the each first DMRS port, a first channel estimation value of the first layer of the first signal; and
obtaining the channel estimation value of the first layer of the first signal by summing all the first channel estimation values corresponding to the first DMRS ports.

25. The signal transmission apparatus according to claim 21, wherein the transceiver is further configured to implement the following step:
sending or receiving the QCL relationship between the DMRS ports and the first reference signals through a transmission configuration indicator (TCI) state.

26. The signal transmission apparatus according to claim 25, wherein the sending or receiving the QCL relationship between the DMRS ports and the first reference signals through the TCI state comprises:
sending or receiving N TCI states corresponding to the first signal, wherein each TCI state of the N TCI states is used for indicating a QCL relationship between one or more DMRS ports of the DMRS ports and a third reference signal, the third reference signal comprises the first reference signal, and different TCI states of the TCI states correspond to different DMRS ports.

27. The signal transmission apparatus according to claim 25, wherein the sending or receiving the QCL relationship between the DMRS ports and the first reference signals through the TCI state comprises:
sending or receiving M TCI states corresponding to the first signal,
wherein at least one of the M TCI states comprises identifier information used for indicating the N first reference signals and information used for indicating a QCL type corresponding to the N first reference signals, and different TCI states comprise different QCL types, M being an integer greater than 1.

28. The signal transmission apparatus according to claim 21, wherein transmission of each layer of the first signal is performed through at least two transmission reception points (TRPs), and transmission of a signal corresponding to one DMRS port of the DMRS ports is performed through one TRP of the at least two TRPs or a group of TRPs of the at least two TRPs.

29. The signal transmission apparatus according to claim 28, wherein different DMRS ports associated with one layer of the first signal correspond to different TRPs or TRP groups.

30. The signal transmission apparatus according to claim 21, wherein the channel characteristics comprise a first large-scale property, the QCL relationship is a QCL relationship related to the first large-scale property, and the first large-scale property comprises at least one of a delay property, a Doppler property, or a spatial property.

31. The signal transmission apparatus according to claim 21, wherein the first reference signal comprises at least one of:
a tracking reference signal (TRS);
a channel state information reference signal (CSI-RS) used for obtaining channel state information (CSI);
a CSI-RS used for beam management; or,
a sounding reference signal (SRS).

32. A signal transmission apparatus, comprising a memory, a transceiver and a processor, wherein the memory is configured to store a computer program, the transceiver is configured to send and receive data under the control of the processor, and the processor is configured to read the computer program in the memory to implement following steps:
controlling the transceiver to transmit a first reference signal;
controlling the transceiver to transmit a first signal and a demodulation reference signal (DMRS) associated with the first signal;
wherein each layer of the first signal is associated with N DMRS ports corresponding to the DMRS, the N DMRS ports associated with one layer of the first signal are in one-to-one correspondence with N first reference signals and there is a QCL relationship between each of the N DMRS ports and the corresponding first reference signal, N being an integer greater than 1.

33. The signal transmission apparatus according to claim 32, wherein the first signal comprises a plurality of layers, and DMRS ports associated with one layer of the plurality of layers are different from DMRS ports associated with another layer of the plurality of layers.

34. The signal transmission apparatus according to claim 32, wherein the transceiver is further configured to implement the following step:
sending or receiving the QCL relationship between the DMRS ports and the first reference signals through a transmission configuration indicator (TCI) state.

35. The signal transmission apparatus according to claim 34, wherein the sending or receiving, by the transceiver, the QCL relationship between the DMRS ports and the first reference signals through the TCI state comprises:
controlling the transceiver to send or receive N TCI states corresponding to the first signal, wherein each TCI state of the N TCI states is used for indicating a QCL relationship between one or more DMRS ports of the DMRS ports and a third reference signal, the third reference signal comprises the first reference signal, and different TCI states of the TCI states correspond to different DMRS ports.

36. The signal transmission apparatus according to claim 34, wherein the sending or receiving, by the transceiver, the QCL relationship between the DMRS ports and the first reference signals through the TCI state comprises:
controlling the transceiver to send or receive M TCI states corresponding to the first signal,
wherein at least one of the M TCI states comprises identifier information used for indicating the N first reference signals and information used for indicating a QCL type corresponding to the N first reference signals, and different TCI states comprise different QCL types, M being an integer greater than 1.

37. The signal transmission apparatus according to claim 32, wherein transmission of each layer of the first signal is performed through at least two TRPs, and transmission of a signal corresponding to one DMRS port of the DMRS ports is performed through one TRP of the at least two TRPs or a group of TRPs of the at least two TRPs.

38. The signal transmission apparatus according to claim 37, wherein different DMRS ports associated with one layer of the first signal correspond to different TRPs or TRP groups.

39. The signal transmission apparatus according to claim 32, wherein the QCL relationship is a QCL relationship related to a first large-scale property, and the first large-scale property comprises at least one of a delay property, a Doppler property, or a spatial property.

40. The signal transmission apparatus according to claim 32, wherein the first reference signal comprises at least one of:
a tracking reference signal (TRS);
a channel state information reference signal (CSI-RS) used for obtaining channel state information (CSI);
a CSI-RS used for beam management; or,
a sounding reference signal (SRS).

41. A signal transmission apparatus, comprising:
a first reception module, configured to receive a first reference signal;
a second reception module, configured to receive a DMRS; and
a first determination module, configured to determine a reception parameter of a first signal according to channel characteristics of the first reference signal and/or perform a channel estimation for the first signal according to the channel characteristics of the first reference signal,
wherein each layer of the first signal is associated with N DMRS ports corresponding to the DMRS, the N DMRS ports associated with one layer of the first signal are in one-to-one correspondence with N first reference signals and there is a quasi co-location (QCL) relation between each of the N DMRS ports and the corresponding first reference signal, N being an integer greater than 1.

42. The signal transmission apparatus according to claim 41, wherein the first signal comprises a plurality of layers, and DMRS ports associated with one layer of the plurality of layers are different from DMRS ports associated with another layer of the plurality of layers.

43. The signal transmission apparatus according to claim 41, wherein the first determination module is configured to determine, according to channel measurement information of first DMRS ports and channel characteristics of second reference signals, a channel estimation value of a first layer of the first signal;
wherein, the first DMRS ports are DMRS ports associated with the first layer of the first signal, the second reference signals are the first reference signals having the QCL relationship with the first DMRS ports, and the first layer of the first signal is any one layer of the first signal.

44. The signal transmission apparatus according to claim 43, wherein the first determination module comprises:
a first determination submodule, configured to determine, according to the channel measurement information of each of the first DMRS ports and the channel characteristics of the second reference signal corresponding to the each first DMRS port, a first channel estimation value of the first layer of the first signal; and
a first obtaining submodule, configured to obtain the channel estimation value of the first layer of the first signal by summing all the first channel estimation values corresponding to the first DMRS ports.

45. The signal transmission apparatus according to claim 41, further comprising:
a first transceiver module, configured to send or receive the QCL relationship between the DMRS ports and the first reference signals through a transmission configuration indicator (TCI) state.

46. The signal transmission apparatus according to claim 45, wherein the first transceiver module is configured to send or receive N TCI states corresponding to the first signal, wherein each TCI state of the N TCI states is used for indicating a QCL relationship between one or more DMRS ports of the DMRS ports and a third reference signal, the third reference signal comprises the first reference signal, and different TCI states of the TCI states correspond to different DMRS ports.

47. The signal transmission apparatus according to claim 45, wherein the first transceiver module is configured to send or receive M TCI states corresponding to the first signal,
wherein at least one of the M TCI states comprises identifier information used for indicating the N first reference signals and information used for indicating a QCL type corresponding to the N first reference signals, and different TCI states comprise different QCL types, M being an integer greater than 1.

48. The signal transmission apparatus according to claim 41, wherein transmission of each layer of the first signal is performed through at least two transmission reception points (TRPs), and transmission of a signal corresponding to one DMRS port of the DMRS ports is performed through one TRP of the at least two TRPs or a group of TRPs of the at least two TRPs.

49. The signal transmission apparatus according to claim 48, wherein different DMRS ports associated with one layer of the first signal correspond to different TRPs or TRP groups.

50. The signal transmission apparatus according to claim 41, wherein the channel characteristics comprise a first large-scale property, the QCL relationship is a QCL relationship related to the first large-scale property, and the first large-scale property comprises at least one of a delay property, a Doppler property, or a spatial property.

51. The signal transmission apparatus according to claim 41, wherein the first reference signal comprises at least one of:
a tracking reference signal (TRS);
a channel state information reference signal (CSI-RS) used for obtaining channel state information (CSI);
a CSI-RS used for beam management; or,
a sounding reference signal (SRS).

52. A signal transmission apparatus, comprising:
a first transmitting module, configured to transmit a first reference signal; and
a second transmitting module, configured to transmit a first signal and a demodulation reference signal (DMRS) associated with the first signal,
wherein each layer of the first signal is associated with N DMRS ports corresponding to the DMRS, the N DMRS ports associated with one layer of the first signal are in one-to-one correspondence with N first reference signals and there is a QCL relationship between each of the N DMRS ports and the corresponding first reference signal, N being an integer greater than 1.

53. The signal transmission apparatus according to claim 52, wherein the first signal comprises a plurality of layers, and DMRS ports associated with one layer of the plurality of layers are different from DMRS ports associated with another layer of the plurality of layers.

54. The signal transmission apparatus according to claim 52, further comprising:
a second transceiver module, configured to send or receive the QCL relationship between the DMRS ports and the first reference signals through a transmission configuration indicator (TCI) state.

55. The signal transmission apparatus according to claim 54, wherein the second transceiver module is configured to send or receive N TCI states corresponding to the first signal, wherein each TCI state of the N TCI states is used for indicating a QCL relationship between one or more DMRS ports of the DMRS ports and a third reference signal, the third reference signal comprises the first reference signal, and different TCI states of the TCI states correspond to different DMRS ports.

56. The signal transmission apparatus according to claim 54, wherein the second transceiver module is configured to send or receive M TCI states corresponding to the first signal,
wherein at least one of the M TCI states comprises identifier information used for indicating the N first reference signals and information used for indicating a QCL type corresponding to the N first reference signals, and different TCI states comprise different QCL types, M being an integer greater than 1.

57. The signal transmission apparatus according to claim 52, wherein transmission of each layer of the first signal is performed through at least two TRPs, and transmission of a signal corresponding to one DMRS port of the DMRS ports is performed through one TRP of the at least two TRPs or a group of TRPs of the at least two TRPs.

58. The signal transmission apparatus according to claim 57, wherein different DMRS ports associated with one layer of the first signal correspond to different TRPs or TRP groups.

59. The signal transmission apparatus according to claim 52, wherein the QCL relationship is a QCL relationship related to a first large-scale property, and the first large-scale property comprises at least one of a delay property, a Doppler property, or a spatial property.

60. The signal transmission apparatus according to claim 52, wherein the first reference signal comprises at least one of:
a tracking reference signal (TRS);
a channel state information reference signal (CSI-RS) used for obtaining channel state information (CSI);
a CSI-RS used for beam management; or,
a sounding reference signal (SRS).

61. A processor readable storage medium, wherein the processor readable storage medium stores program instructions, the program instructions are configured to be executed by a processor to implement steps of the signal communications method according to any one of claims 1 to 11, or implement steps of the signal communications method according to any one of claims 12 to 20.
